Europäisches Patentamt

European Patent Office

Office européen des brevets

(11) Publication number: **0 188 630**
**B1**

## (12) EUROPEAN PATENT SPECIFICATION

(45) Date of publication of patent specification: **31.10.90**

(21) Application number: **84309057.2**

(22) Date of filing: **21.12.84**

(51) Int. Cl.⁵: **F 24 F 5/00**

(54) Air conditioning apparatus.

(30) Priority: **21.12.83 JP 242766/83**
**21.12.83 JP 242770/83**
**24.11.84 JP 248527/84**

(43) Date of publication of application:
**30.07.86 Bulletin 86/31**

(45) Publication of the grant of the patent:
**31.10.90 Bulletin 90/44**

(84) Designated Contracting States:
**DE FR GB**

(56) References cited:
**CH-A- 583 887**
**DE-A-2 243 784**

(73) Proprietor: **DAIKIN INDUSTRIES, LIMITED**
**Shinhankyu-Building, 12-39, I-chome Umeda**
**Kita-ku Osaka-shi Osaka (JP)**

(72) Inventor: **Sugimoto, Takayuki Daikin Industries Ltd.**
**Shiga Manufactory 1000-2, Aza Ohtani**
**Okamoto-cho Kusatsu-shi Shiga (JP)**
Inventor: **Okuzawa, Yoshiyuki Daikin Industries Ltd.**
**Shiga Manufactory 1000-2, Aza Ohtani**
**Okamoto-cho Kusatu-shi Shiga (JP)**
Inventor: **Suzuki, Nobuo Daikin Industries Ldt.**
**Shiga Manufactory 1000-2, Aza Ohtani**
**Okamoto-cho Kusatu-shi Shiga (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

**Description**

This invention relates to air-conditioning apparatus suitable for use with a plurality of rooms and more particularly to a multi-room type air-conditioner which comprises an outdoor unit having a compressor, 4-way valve and a supply-side heat exchanger, and a plurality of indoor units each having a consumer-side heat exchanger and a fan and is capable of providing cooling or heating by changeover of said 4-way valve.

Generally in a multi-room type air-conditioner connecting a plurality of indoor units with an outdoor unit, it is common to connect the liquid line and gas line mains of an outdoor unit respectively to a plurality of liquid line and gas line branches corresponding in number to the indoor units connected thereto and to provide a solenoid valve in each branch to switch on and off as the indoor unit comes on or goes off. However, since a solenoid valve is only capable of on and off operation and the valve is fully opened in the operating condition of the unit, it is necessary to provide the indoor unit with a pressure reducing device for cooling and a check valve for bypassing the expansion device and the outdoor unit with a pressure reducing device for heating operations and a check valve for bypassing said pressure reducing mechanism. It is also necessary to provide a by-pass passage to purge, to the low pressure side, refrigerant accumulating in the shut-off indoor unit due to leakage of the gas line branch solenoid valve, which complicates the refrigerant circuit and thus increases its cost.

One attempt at overcoming these problems by using a system with a thermal-electric expansion valve in lieu of a solenoid valve in a liquid line branch was disclosed in Japanese Unexamined Patent Publication No. Sho 56-49,856. Briefly, this device, which is shown in Fig. 15, comprise a multi-room type air-conditioning apparatus with an outdoor unit A having a compressor 51, a 4-way valve 52, a supply side heat exchanger 53 and a plurality of indoor units each having a consumer-side heat exchanger 54 and a fan 55 which are connected to the outdoor unit A by means of a plurality of connection pipes C. A thermal-electric expansion valve 58 is provided in each liquid line branch 57 branching out from the liquid refrigerant line main 56 of the outdoor unit A and a solenoid valve 61 is provided in each gaseous refrigerant line branch 60 branching out from the gaseous refrigerant line main 59. A first receiver 62 is mounted in said liquid line main and secondary receivers 63 are mounted in each liquid line branch. Liquid refrigerant is received by the first receiver 62 during cooling and the secondary receivers 63 during heating operations and then fed to said expansion valve 58.

The expansion vave 58 utilizes a bi-metallic element and an electric heater for heating said bi-metallic element the valve opening being controlled by adjustment of the current through said electric heater during both cooling and heating operations. It is therefore not necessary to provide separate expansion valves for cooling and heating, which simplifies the refrigeration circuit to that extent. However, the expansion valve 58 is constructed so as to completely close during cooling and remain fully open during heating operations, it is necessary to provide a solenoid valve 61 in said gas line branch 60. Furthermore, since the expansion valve 58 is used as the pressure reducing mechanism during both cooling and heating operations, it is necessary to provide a secondary receiver 63 in each liquid line branch 57 and the first receiver 62 in the liquid line main 56, as a result of which a substantial reduction of components cannot be expected and the complexity of the piping work cannot be significantly reduced.

Further, since the expansion valve 58 controls the degree of superheat only during both cooling and heating operations and cannot control the degree of supercooling, especially during heating operations it controls the degree of super-heat of low pressure gaseous refrigerant at the outlet of said supply-side heat exchanger 53 of the outdoor unit A, it is impossible to provide an appropriate refrigerant distribution to each of the indoor units B. Nowhere in the prior art is there any specific disclosure of any system which can provide appropriate refrigerant distribution to each of the indoor units ·B, whilst still controlling the degree of super-heat.

Another arrangement is described in Swiss Patent Specification No. 583887 which discloses an air-conditioning apparatus for heating or cooling a building. The apparatus includes a compressor and an outdoor and an indoor heat exchanger, the compressor being connected through a 4-way valve and a system of conduits, to both the indoor and outdoor heat exchangers. In a cooling mode, the outdoor exchanger acts as a condenser, compressed gas being condensed and passed through a reduction valve into the indoor exchange where it undergoes a pressure release effect so as to return to the vapor phase and thus remove heat from the air within the building. In a heating mode, the compressed gas first passes through the indoor exchanger which operates as a condenser, a portion of the gas flow then travelling in the opposite direction to that travelled in the cooling mode so as to enter the outdoor exchanger, which is operating as a condenser, a further portion passing through a branch line to a container or reservoir.

It is an object of the present invention to avoid or minimize one or more of the abovementioned disadvantages. One objective of this invention is to provide a multi-room type air-conditioner wherein it is possible to prevent liquid refrigerant from accumulating in the non-operating indoor unit without using a solenoid valve in each gas line branch as is used in conventional systems and at the same time to control, by means of a motorized valve mounted on each liquid line branch, the degree of super-heat of low pressure gaseous refrigerant at the outlet of the consumer side heat exchanger of each indoor unit during cooling and the degree of supercooling of high pressure liquid refrigerant at the outlet of said consumer side heat exchanger during heating and reduce the drift of the refrigerant flow to be admitted into the operating indoor units during heating operations.

The present invention provides a multi-room type air-conditioning apparatus comprising an outdoor unit (A) which has a compressor (1), a supply-side heat exchanger (3) and a 4-way valve (2) with two high and two low pressure change-over ports, a plurality of indoor units (B) each of which has a consumer-side heat exchanger (8) and a fan (9) attached thereto, each of said indoor units (B) being connected with said outdoor unit by a first and a second connection pipe (C) and is capable of providing cooling and heating by switching of said 4-way valve (2), said apparatus having a liquid refrigerant line main (4) connected to said supply-side heat exchanger (3) for conducting liquid refrigerant, a plurality of liquid line branches (5) branching out of said liquid line main (4) each branch being connected to a said first connection pipe (C), a discharge pipe (18) connecting the compressor with a high pressure change-over port of the 4-way valve (2), a suction pipe (19) connecting the compressor with a low pressure change-over port of the 4-way valve (2), a gaseous refrigerant line main (6) connected to the supply-side heat exchanger (3) for conducting gaseous refrigerant, a plurality of gas line branches (7) branching out of said gas line main (6) and connected to said second connection pipes (C), the 4-way valve being arranged along said gaseous refrigerant line main (6) and in between the supply side heat exchanger (3) and the plurality of gas line branches (7), motorized valves ($EV_1$—$EV_3$) mounted in each of said liquid line branches (5) with continuously variable valve opening control between fully closed and fully open positions, a super-heat control means ($TH_1$—$TH_3$), for low pressure gaseous refrigerant at the consumer-side heat exchanger (8) outlets during cooling operations of the operating indoor units (B) by adjusting an amount of opening between fully closed and a selected open or partially open condition of said motorized valves ($EV_1$—$EV_3$), a super-cool control means ($TH_4$—$TH_6$), for high pressure liquid refrigerant at the consumer-side heat exchanger (8) outlet during heating operations of the operating indoor unit, valve control means provided for each one of said motorized valves ($EV_1$—$EV_3$) each said valve being connected into a respective one of said liquid line branches to an associated indoor unit (B), each valve control means being adapted to operate when the associated indoor unit is non-operating to cause the respective motorized valve to be fully closed during the cooling operation and at least partially open during the heating operation, fan control means formed and arranged for switching off the fans of non-operating indoor units (B) and residual flow valve control means formed and arranged for closing down to a small opening, those of the motorized valves ($EV_1$—$EV_3$) in the liquid line branches (S) connected to non-operating indoor units (B).

Thus with an apparatus of the present invention, it is possible, without using a solenoid valve as in the prior art, to prevent liquid refrigerant from accumulating in the non-operating indoor units by closing the motorized valves connected thereto during cooling and closing the motorized valve down to a small opening during heating operations, thereby reducing the number of components and simplifying construction of the apparatus. Furthermore, it is possible, by means of said motorized valves, to control super-heat of the low pressure gaseous refrigerant at the consumer side heat exchanger outlet during cooling and super-cooling of high pressure liquid refrigerant at the consumer heat exchanger during heating operations and especially during heating operations, to optimize refrigerant capacity distribution by reducing the drift of refrigerant flow to the operating indoor units.

The opening of the motorized valves connected to the operating indoor units can be controlled by the loading applied to each respective indoor unit but it may also be controlled in accordance with the number of indoor units in operation.

In this case, there may be provided operation sensing means for detecting operation or non-operation of each indoor unit, and adding up the number of indoor units in operation and a valve opening control means for setting said motorized valves mounted in the liquid line branches connected to the operating indoor units to suitable openings in response to the output of said operation sensing means.

In another preferred embodiment, the valve opening is controlled during heating operations so that during a certain period after the start of the operation, the valve opening is set at a given opening and thereafter the temperatures of high pressure liquid refrigerant at consumer-side heat exchanger outlets during heating operations are sensed and mean values of said temperatures are calculated and the valve openings are controlled by comparing said means temperatures with each respective temperature.

In this case the system is provided with:

mode sensing means for detecting heating mode or cooling mode operations, operation or non-operation sensing means, means for sensing high pressure liquid refrigerant temperature at each consumer side heat exchanger outlet during heating operations, valve opening control means for maintaining motorized valves connected in liquid line branches connected to operating indoor units at a given opening for a certain period of time after the start of the heating operation, means for sensing mean temperature of the high pressure liquid refrigerant at the consumer-side heat exchanger outlet of the operating indoor unit, first comparator means for comparing said mean temperature with said liquid refrigerant temperature in each said branch, and temperature adjusting means for adjusting the liquid refrigerant temperature at the use-side heat exchanger outlets of the operating indoor units to a value close to said mean temperature. Thus it is possible with this form of embodiment to control super-cooling of said high pressure liquid refrigerant during heating operations in accordance with individual room loading and optimize thermal conditioning capacity distribution by reducing drift of refrigerant flow to the indoor units while utilizing efficiency each consumer-side heat exchanger and improve heating capacity and EER (Energy Efficiency Ratio) by adequately controlling super-cooling.

Whilst the motorized valve mounted in the liquid line branch connected to the non-operating indoor unit is completely closed during cooling and closed down to a small opening during heating for prevention of liquid refrigerant accumulation in said indoor unit, the control of said small opening is carried out by fixedly setting a predetermined small opening or by basing the small opening on the output of the sensing means provided for sensing the high pressure liquid temperature at the consumer-side heat exchanger outlet.

The small opening of the first motorized valve is also made such that refrigerant is admitted at a level which can condense in the consumer-side heat exchanger by natural radiation alone with the fan stopped.

In the case of a predetermined small opening setting of the motorized valve corresponding to the non-operating indoor unit during heating operations, when the liquid refrigerant temperature at the consumer-side heat exchanger outlet of the non-operating indoor unit is found to be lower than said mean temperature when comparing the sensing results of said liquid refrigerant temperature sensing means with said mean temperature, it is possible to prevent liquid accumulation in the non-operating indoor unit by providing a means of modulating the opening of said motorized valve towards increased opening.

Also, in this invention, it is possible to provide, in said liquid line main, a superheat control valve for controlling low pressure gaseous refrigerant superheat at the supply-heat exchanger outlet during heating or the super-cooling control valve which controls high pressure liquid refrigerant super-cooling at said supply-side heat exchanger outlet during cooling operations.

In this case, a receiver is mounted between the super-heat control valve or super-cooling control valve and the branching point of the liquid line branches and super-heat sensing means for low pressure gaseous refrigerant at the supply-side heat exchanger outlet during heating or super-cooling sensing means for high pressure liquid refrigerant at said heat exchanger outlet during cooling is provided. Thereby, it is possible to control super-heat during heating or super-cooling during cooling operations together with superheat control during cooling or super-cooling control during heating operations at the consumer-side heat exchanger outlet provided by

said motorized valves mounted in said liquid line branches (for convenience hereinafter referred to as the first motorized valves).

A motorized valve (hereinafter referred to as the second or secondary motorized valve) is preferably used as the control means and when such a second motorized valve is used, it is possible for this to be arranged so that the second motorized valve controls super-cooling at said supply-side heat exchanger outlet during cooling and superheat at said heat exchanger outlet during heating operations.

In this case, it is possible to control, by means of said first motorized valve, superheat during cooling and super-cooling during heating operations, and by means of said second motorized valve, super-cooling during heating operations and by means of said second motorized valve, super-cooling during cooling and super-heat during heating operations and thereby to operate efficiently the supply-side heat exchanger and each consumer-side heat exchanger for improvement of cooling and heating capacity and EER.

Further preferred features and advantages of the invention will appear from the following detailed description given by way of example of some preferred embodiments illustrated with reference to the accompanying drawings in which:

Fig. 1 is the refrigerant circuit diagram of a first embodiment of an air conditioning apparatus of the invention;

Fig. 2 is a graph illustrating the opening characteristics of a motorized valve suitable for use in the apparatus of the invention;

Fig. 3 is the refrigerant circuit diagram of a second embodiment;

Fig. 4 is a schematic block circuit diagram of a controller for the circuit of Fig. 3;

Fig. 5 is an operational flow diagram for cooling operations with the second embodiment, and

Fig. 6 is an operational flow diagram for heating operations therewith;

Fig. 7 is the refrigerant circuit diagram of a third embodiment;

Fig. 8 is a schematic block circuit diagram of a controller for the circuit of Fig. 7;

Fig. 9 is an operational diagram for cooling operations with the third embodiment, and

Fig. 10 is an operational flow diagram for heating operation therewith;

Fig. 11 is the refrigerant circuit diagram of a fourth embodiment;

Fig. 12 is a schematic block circuit diagram of a controller for the circuit of Fig. 11.

Fig. 13 is an operation flow diagram for cooling operations with the fourth embodiment;

Fig. 14 is the refrigerant circuit diagram of a fifth embodiment; and

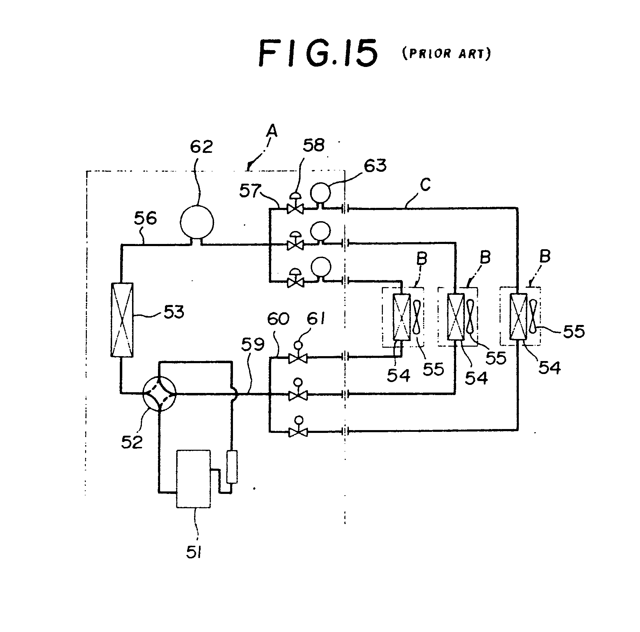

Fig. 15 is the refrigerant circuit diagram of a conventional prior art apparatus.

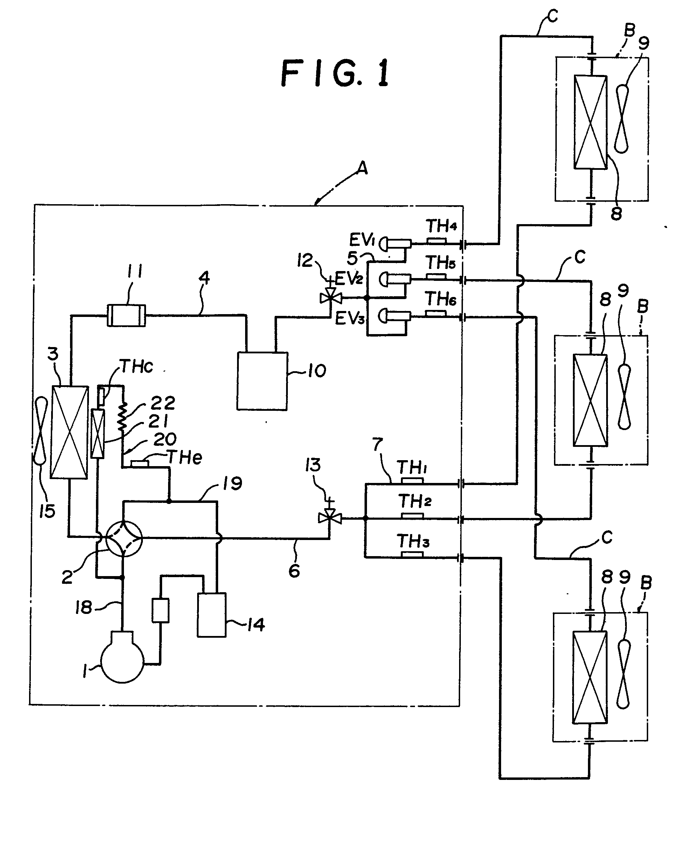

Fig. 1 shows a typical embodiment of the present invention wherein the refrigerant circuit comprises an outdoor unit $A$ having a compressor 1, a 4-way valve 2, a supply-side heat exchanger 3, a liquid refrigerant line main 4, a plurality of liquid line branches 5 branching out of said liquid line main 4, gaseous refrigerant line main 6 and a plurality of gas line branches 7 branching out of said gas line main and a plurality of indoor units $B$ each having a consumer-side heat exchanger and a fan which are connected in parallel between said liquid line branches 5 and said gas line branches 7 through a plurality of connection pipes $C$. By means of appropriate switching of said 4-way valve 2, the system is capable of providing cooling or heating.

In addition the above-described multi-room air conditioning system is provided, in said liquid line branches 5, with first motorized valves $EV_1$—$EV_3$ each of which is capable of continuously variable opening between its fully open and fully closed positions. Also the liquid line main is provided with a receiver 10, a drier 11, stop valves 12, 13 mounted respectively in the liquid line main 4 and the gas line main 5, an accumulator 14 and a fan 15 attached to said supply-side heat exchanger 3.

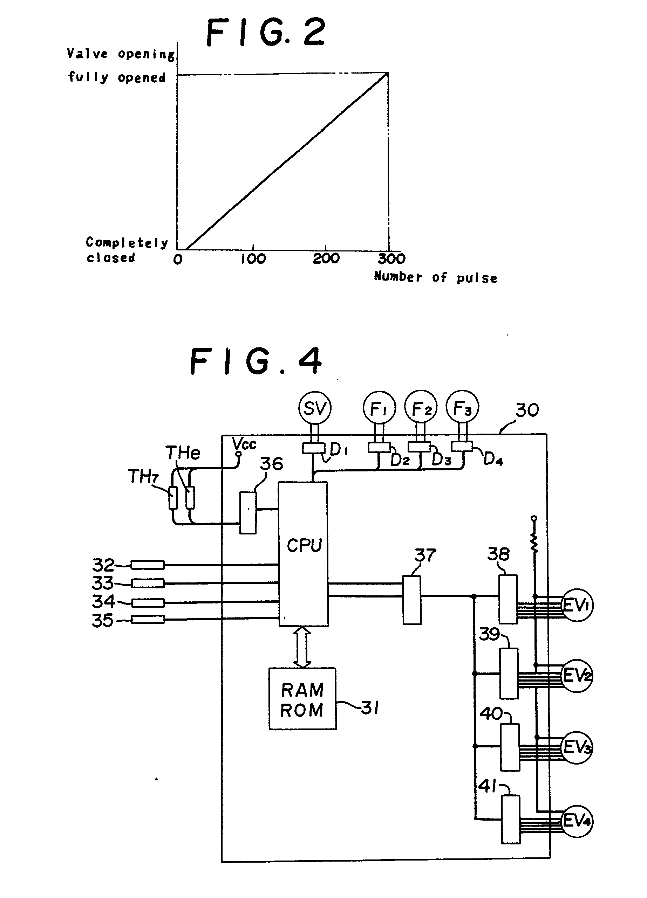

The first motorized valves $EV_1$—$EV_3$ are generally of the pulse motor type which rotates through a predetermined angle for each pulse and can be continuously variably controlled, as shown in Fig. 2 to any desired degree of opening between the completely closed and fully opened positions by controlling the pulse number input to said motorized valves.

The first motorized valves $EV_1$—$EV_3$ are also controlled to suitable degrees of opening in response to the individual room loadings of said indoor units $B$ and to zero opening for cooling and a small opening for heating in the case of inoperative indoor units $B$.

The embodiment of Fig. 1 also includes superheat sensing means comprising first temperature sensors $TH_1$—$TH_3$ for sensing low pressure gaseous refrigerant temperatures $T_1$—$T_3$ at each consumer-side heat exchanger 8 outlet for cooling operations with said indoor units $B$ and second temperature sensing means for sensing the saturation temperature $T_e$ of low pressure gaseous refrigerant, together with superheat control means which controls superheat of low pressure gaseous refrigerant at the consumer-side heat exchanger outlet for cooling operations with each operating indoor unit by adjusting valve opening in response to the output of said superheat sensing means, and at the same time utilizes super-cool sensing means comprising third temperature sensors $TH_4$—$TH_6$ for sensing high pressure liquid refrigerant temperature $T_4$—$T_6$ at the consumer-side heat exchanger outlet for heating operations of said indoor units and second temperature sensing means for sensing the saturation temperature $T_c$ of high pressure liquid refrigerant, and super-cool control means for controlling super-cooling of high pressure liquid refrigerant at said consumer-side heat exchanger 8 outlet for heating operations by adjusting the valve opening of the first motorized valves $EV_1$—$EV_3$ in response to the output of said super-cool sensing means.

The first temperature sensing means can be constructed, as shown in the second embodiment, so that a sensing circuit 16 (hereinafter called the first sensing circuit) is provided between the liquid line main 4 or receiver 10 of the outdoor unit $A$ and the suction side of the compressor 1 with a pressure reducing device 17 mounted inbetween. The second temperature sensor $TH_e$ is mounted between said pressure reducing device 17 and the suction side of the compressor 1 for sensing the saturation temperature $T_e$ of low pressure gaseous refrigerant. In the embodiment of Fig. 1 a temperature sensing circuit 20 (hereinafter called the second sensing circuit) is provided between the discharge line 18 connecting the compressor 1 with the 4-way valve 2 and the suction line 19 connecting the 4-way valve 2 with compressor 1 with a heat exchanger 21 for sensing temperature thereat and a pressure reducing device 22 mounted in said circuit 20 and the second temperature sensor $TH_e$ is mounted between said pressure reducing device 22 and the suction side of the compressor 1 for sensing the saturation temperature $T_e$ of low pressure gaseous refrigerant.

The second sensing circuit 20 also serves as the second temperature sensing means by mounting a fourth temperature sensor $TH_c$ between said temperature sensing circuit heat exchanger 21 and said pressure reducing mechanism 22 in order to sense the saturation temperature $T_c$ of high pressure liquid refrigerant passing through said heat exchanger 21.

In the above-described construction, the first temperature sensors $TH_1$—$TH_3$ are mounted in each gas line branch 7 and by means of said first temperature sensors $TH_1$—$TH_3$ and the second temperature sensor $TH_e$, superheat of low pressure gaseous refrigerant at the consumer side heat exchanger 8 outlet during cooling operations of said indoor unit, can be sensed. Also said third temperature sensors $TH_4$—$TH_6$ are mounted respectively in each liquid line branch 5 and by means of said third temperature sensors $TH_4$—$TH_6$ and said fourth temperature sensors $TH_c$, it is possible to sense super-cooling of high pressure liquid refrigerant at said consumer-side heat exchanger outlet during heating.

Each of the temperature sensors ($TH_1$—$TH_6$, $TH_e$, $TH_c$) of the above described super-heat and super-cool sensing means is electrically connected to the valve control means (not shown) of each of the motorized valves $EV_1$—$EV_3$ to input the outputs of said temperature sensors into said valve control means and thereby control the opening of the motorized valves $EV_1$—$EV_3$ for control of super-heat during cooling and super-cool during heating operations.

In the abovedescribed embodiment, since the second sensing circuit 20 is provided on the outdoor unit $A$, the first temperature sensors $TH_1$—$TH_3$ mounted in the gas line branches 7, the third temperature sensors $TH_4$—$TH_6$ mounted in the liquid line branches 5, all the wiring connecting said first and third temperature sensors

$TH_1$—$TH_6$ and the valve control means of said motorized valves $EV_1$—$EV_3$ for signal transmissions are housed within the outdoor Unit $A$, which avoids the need for any control wiring between the outdoor and indoor units.

Furthermore, since the motorized valves $EV_1$—$EV_3$ are mounted in the liquid line branches only and no motorized valves or solenoid valves as used in conventional systems require to be mounted in the gas line branches 7, it is possible to reduce the number of components correspondingly and thereby simplify the refrigerant circuit. Since the motorized valves $EV_1$—$EV_3$ completely close during cooling and open to only a small opening during heating operations for non-operating units $B$, no liquid accumulation takes place in the non-operating indoor units $B$.

Since, in a non-operating indoor unit $B$, the fan stops, radiation at said consumer-side heat exchanger is reduced to only a small amount which can be handled by natural radiation, the motorized valve $EV_1$—$EV_3$ is shut down to a small opening, i.e. an opening sufficiently small to admit liquid refrigerant condensing as a result of natural radiation. The size of the small residual opening of the motorized valve $EV_1$—$EV_3$ during heating operations may be fixed at a suitably small predetermined valve.

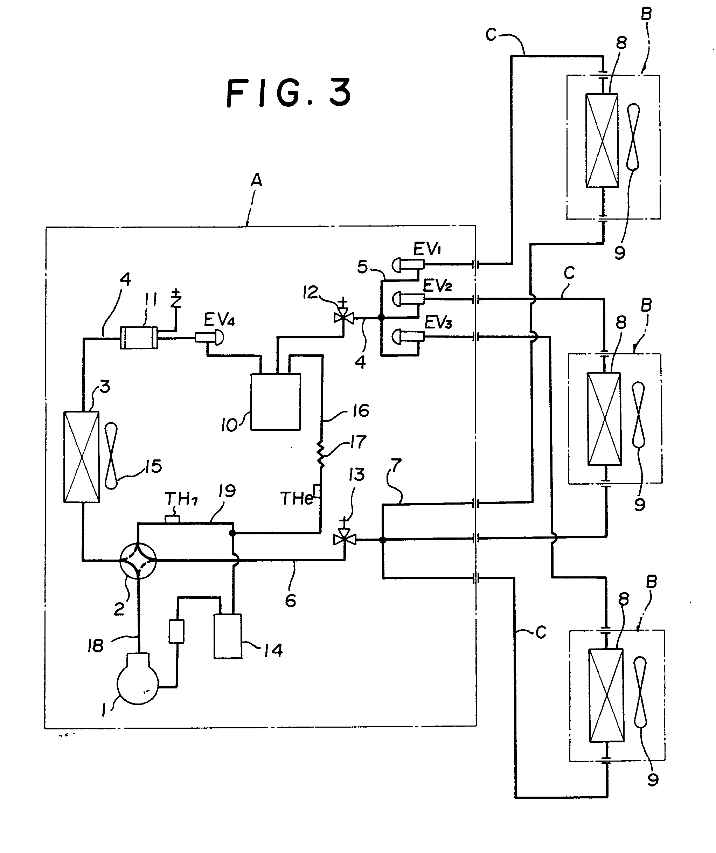

The construction of the second embodiment shown in Fig. 3 to Fig. 6 is basically similar to that of the first embodiment shown in Fig. 1, the main difference being that a super-heat control valve is mounted in the liquid line main 4 in order to control superheat of low pressure gaseous refrigerant at the outlet of the supply-side heat exchanger 3 during heating operations.

While an externally equalizing or internally equalizing expansion valve may be used as the superheat control valve, a motorized valve of pulse motor type is preferably used in the second embodiment similarly to the first motorized valve $EV_1$—$EV_3$. For convenience the second motorized valve is identified by the reference $EV_4$.

In the second embodiment—as in the first embodiment—a receiver 10 is provided between the first motorized valve $EV_1$—$EV_3$ and the second motorized valve $EV_4$. Moreover, the first sensing circuit 16 is provided between the gaseous area of said receiver 10 and said suction line 19 in order to sense the saturation temperature $T_e$ of low pressure gaseous refrigerant. The first sensing circuit 16 of this embodiment is for control of valve opening of the second motorized valve $EV_4$ and as stated above, contains a pressure reducing device 17 such as a capillary tube and the second temperature sensor $TH_e$ is mounted in the first sensing circuit 16 between said pressure reducing mechanism 17 and said suction line 19, and a fifth temperature sensor $TH_7$ is mounted on the suction line 19 in order to sense low pressure gaseous refrigerant temperature $T_7$.

Therefore, the deviation $E_1$ is sought between the target superheat $SH$ and a temperature sensed by the second and fifth temperature sensors $TH_e$, $TH_7$, that is, $E_1 = T_7 - T_e - SH$ and the

second motorized valve $EV_4$ is controlled, for example, by means of P Control (Proportional-Pulse Control), 'PD' Control (Proportional-Pulse-Derivative Control) or 'PID' Control (Proportional-Pulse Integral-Derivative Control). When using the abovedescribed conventional superheat control valve instead of said second motorized valve $EV_4$, a bypass circuit bypassing said conventional superheat control valve is provided in said liquid line main 4 and a check valve is mounted on said bypass circuit to pass refrigerant during cooling operations.

Further, the first motorized valves $EV_1$—$EV_3$ in this second embodiment are, unlike those of the first embodiment, controlled in their opening by a pulse input which changes with the number of indoor units $B$, operating at any given time for example, 160 pulses during cooling and 150 pulses during heating operations for one room operation, i.e. with the indoor unit in only one room operating, 120 pulses during cooling and 100 pulses during heating operations for two room operation and 100 pulses during cooling and 70 pulses during heating operations for 3 room operation; and the first motorized valves $EV_1$—$EV_3$ corresponding to the non-operating indoor units $B$ are, like those of the first embodiment, completely closed during cooling and controlled to open only slightly during heating operations which corresponds to, for example, a 40 pulses input.

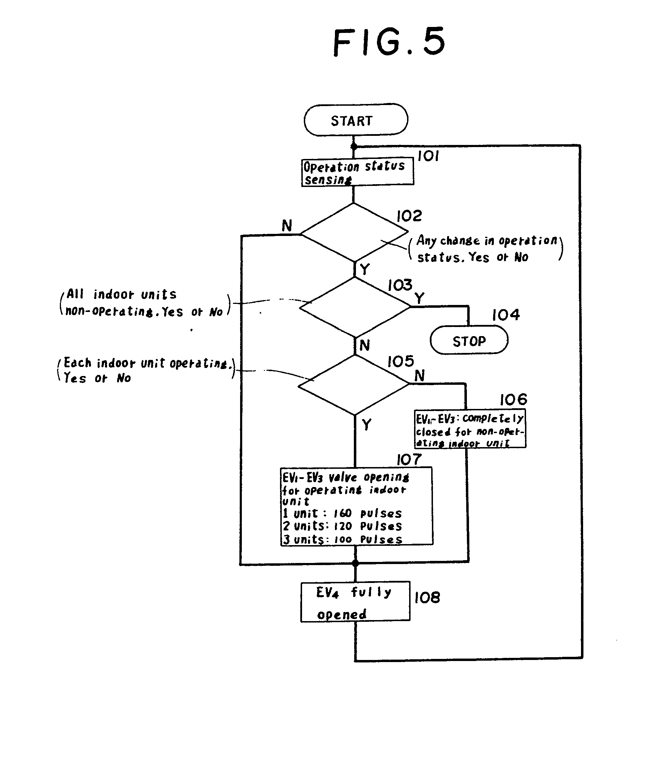

Fig. 4 shows a control system for the abovedescribed first motorized valves $EV_1$—$EV_3$ and second motorized valve $EV_4$. The controller 30 is provided with a central processing unit $CPU$ connecting a memory 31 consisting of $ROM$ and $RAM$, and is connected at the input side to operation status sensing means 32 which senses how many indoor units $B$ are operating, operation mode sensing means 33 which senses whether the units are in cooling or in heating mode, target superheat setting means 34, a room temperature sensor 35 for each of the indoor units $B$, and the fifth temperature sensor $TH_7$ and the second temperature sensor $TH_e$ via an A/D converter 36. Further, a solenoid relay $SV$ which changes over said 4-way valve is connected to the output side via a driver $D_1$, and said first motorized valve $EV_1$—$EV_3$ and second motorized valve $EV_4$ are connected to the output side via multiplexer 37 and a plurality of pulse generating circuits 41 and a fan-motor relays $F_1$—$F_3$ which control the fan-motor of the fan 9 of each indoor unit $B$ are connected to the output side via drivers $D_2$—$D_4$.

Moreover, the central processing unit CPU of said controller 30 has a control function which constitutes control means for controlling said first motorized valves $EV_1$—$EV_3$ corresponding to the operating indoor units $B$ to a given opening in accordance with the number of indoor units operating and control means for controlling the first motorized valves $EV_1$—$EV_3$ corresponding to the non-operating indoor units $B$ so as to completely close then during cooling and open them only slightly during heating operations by stopping the fan 9 of the non-operating indoor unit $B$ simultaneously.

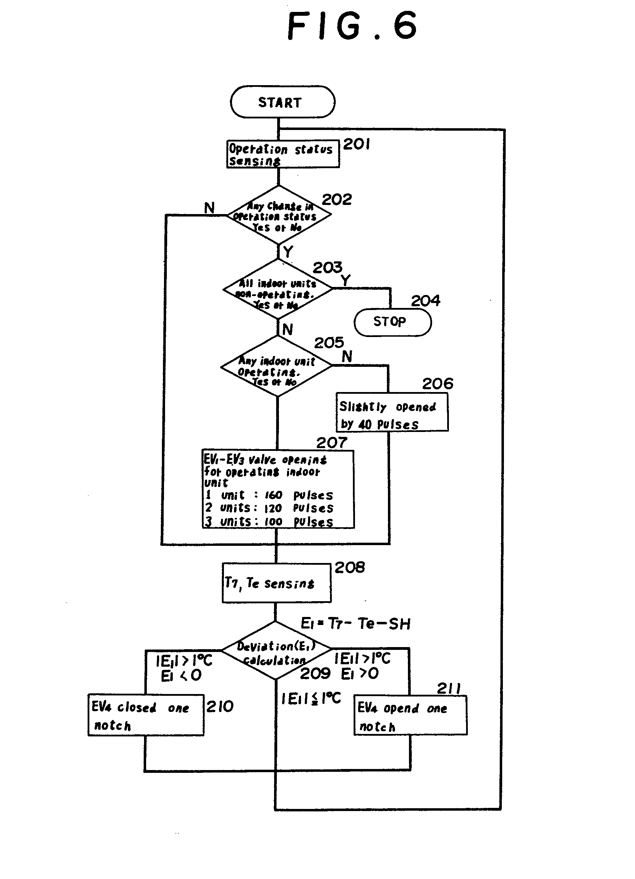

The operation of the first motorized valve $EV_1$—$EV_3$ and second motorized valve $EV_4$ will now be described with reference to the flow charts shown in Figs. 5 and 6.

Fig. 5 is the flow chart for cooling operations which starts with sensing of cooling mode operation by means of the operation mode sensing means 33. Next, by means of operation sensing means 32, the number of indoor units $B$ operating and the operation or non-operation of each individual indoor unit $B$ are checked—operation status sensing (step 101), and subsequently the existence of any changes in operation is checked (step 102). When all the indoor units $B$ stop or rest with shutdown of the compressor 1 under the influence of the room temperature sensors 35 of each of the indoor units $B$ or a master operation switch, control of the first and second motorized valves $EV_1$—$EV_3$, $EV_4$ is discontinued (steps 103, 104). When any indoor unit $B$ is operating, first motorized valves $EV_1$—$EV_3$ corresponding to the non-operating units are completely closed (stop 106) and the first motorized valves $EV_1$—$EV_3$ corresponding to the operating units are controlled to a predetermined opening in accordance with the pulse number changing with the number of indoor units $B$ operating (step 107). During cooling, the second motorized valve $EV_4$ is fully opened (step 108).

Fig. 6 is the flow chart for heating operations, which starts with sensing of heating mode operation as for the cooling operations. After the number of the indoor units $B$ operating and the operation or non-operation of each individual indoor unit $B$ have been checked and thus the operational status checked out (step 201), the existence of any change in the operational status is judged (step 202). When all the indoor units are closed or at rest and the compressor 1 stops, the first and second motorized valves $EV_1$—$EV_3$, $EV_4$ are cut off from control thereof (steps 203, 204). When any indoor unit $B$ is operating, the first motorized valves $EV_1$—$EV_3$ are controlled at a given opening in accordance with the pulse number which changes with the number of indoor units $B$ operating (step 207). In this stage of heating, low pressure gaseous refrigerant temperature $T_7$ passing through said suction line 19 and the saturation temperature of this low pressure gaseous refrigerant $T_e$ are sensed respectively by the fifth temperature sensor $TH_7$ and second temperature sensor $TH_e$ (step 208). The deviation $E_1$ is calculated (step 209) and when the absolute value of this deviation $E_1$ is larger than 1°C and said deviation $E_1$ is less than 0, the second motorized valve $EV_4$ is closed by one predetermined notch (step 210) and when said deviation is more than 0, the second motorized valve $EV_4$ is opened by one predetermined notch and thereby the deviation $E_1$ of said low pressure gaseous refrigerant super-heat can be controlled within ±1°C of the target superheat $SH$ which is set to have 0°—3°C at the outlet of the supply-side heat exchanger 3. In the second embodiment, besides the above-described control, the second motorized valve $EV_4$ may be controlled during heating, to a pre-determined opening so as to obtain appropriate superheat.

Furthermore, while the second motorized valve $EV_4$ is fully opened during cooling in the case of the second embodiment, said motorized valve $EV_4$ may operate so as to control super-cooling of high pressure liquid refrigerant at the supply-side heat exchanger 3 outlet during cooling and an externally equalizing or internally equalizing expansion valve may also be applied to super-cooling control.

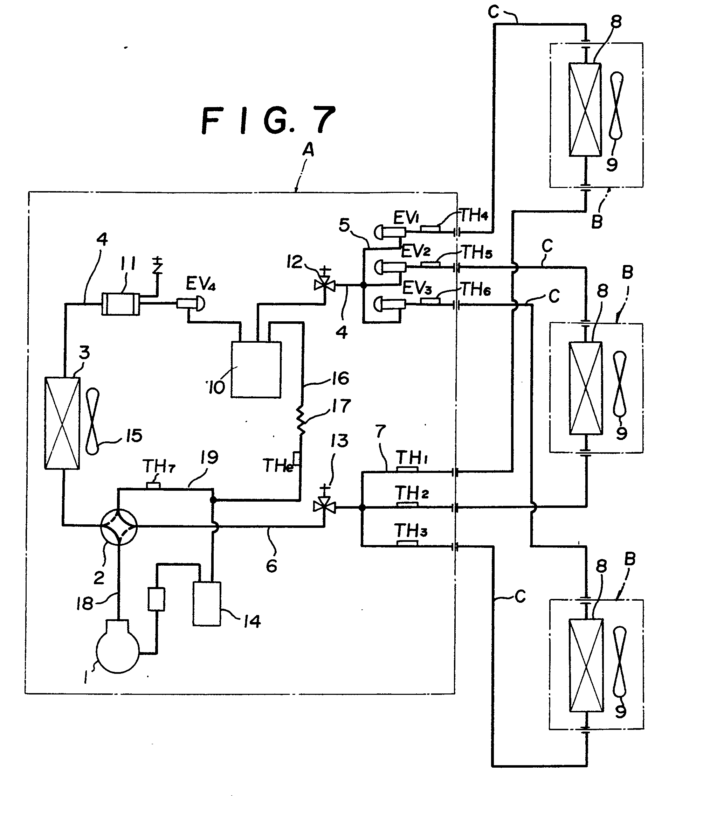

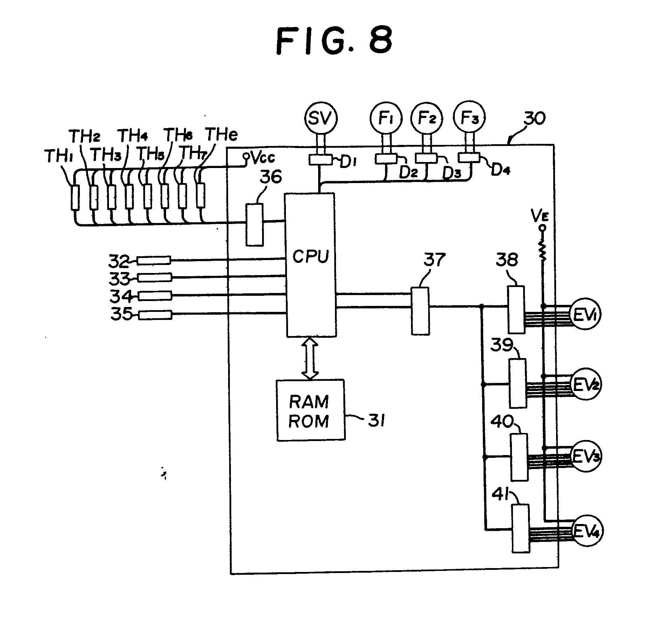

The refrigerant circuit of the third embodiment shown in Figs. 7 to 10 is basically similar to that of the second embodiment and the difference is that like the first embodiment shown in Fig. 1, the first temperature sensors $TH_1$—$TH_3$ are mounted respectively on each gas line branch in order to sense low pressure gaseous refrigerant temperature $T_1$—$T_3$ at each consumer-side heat exchanger 8 outlet during cooling and the third temperature sensors $TH_4$—$TH_6$ are mounted in each liquid line branch in order to sense high pressure liquid refrigerant temperature at each consumer-side heat exchanger 8 outlet during heating operations. The control system which controls the first motorized valve $EV_1$—$EV_3$ mounted in each liquid line branch 5 and the second motorized valve $EV_4$ mounted on the liquid line main 4 for controling superheat of low pressure gaseous refrigerant at the supply-side heat exchanger 3 outlet during heating is basically the same as that of the second embodiment shown in Fig. 4. The difference is the following additional hook-up so constructed that as shown in Fig. 8, on the input side of central processing unit $CPU$ of said controller 30, said first and third temperature sensors $TH_1$—$TH_6$ are connected and said central processing unit $CPU$ incorporates the following four functions:

(1) Valve control means for controlling the first motorized valves $EV_1$—$EV_3$ corresponding to the operating indoor units in accordance with the output of said operation status sensing means 22 so as to open, initially, to a predetermined opening and for a predetermined time (for example, 3 minutes) depending upon the number of the indoor unit $B$ operating;

(2) Means for calculating the mean temperature $Tm$ of high pressure liquid refrigerant temperature $T_4$—$T_6$ sensed by said third temperature sensors $TH_4$—$TH_6$, that is, high pressure liquid refrigerant temperature $T_4$—$T_6$ flowing through said liquid line branches 5 from the operating indoor units $B$.

(3) Means for comparing said mean temperature $Tm$ with the high pressure liquid refrigerant temperatures $T_4$—$T_6$ and controlling the first motorized valves $EV_1$—$EV_3$ corresponding to the operating units $B$ so as to make high pressure liquid refrigerant temperature $T_4$—$T_6$ at the consumer-side heat exchanger outlet of each of the operating indoor units $B$ close to said mean temperature $Tm$,

(4) Means for comparing, during heating operations and with the non-operating indoor units B, each high pressure liquid refrigerant temperature $T_4$—$T_6$ with said mean temperature $Tm$ and controlling the first motorized valves $EV_1$—$EV_3$ corresponding to the non-operating indoor units B so as to modulate said predetermined opening towards opening when high pressure liquid refrigerant temperature at the consumer-side heat exchanger outlet of the non-operating indoor unit B is lower than said mean temperature $Tm$.

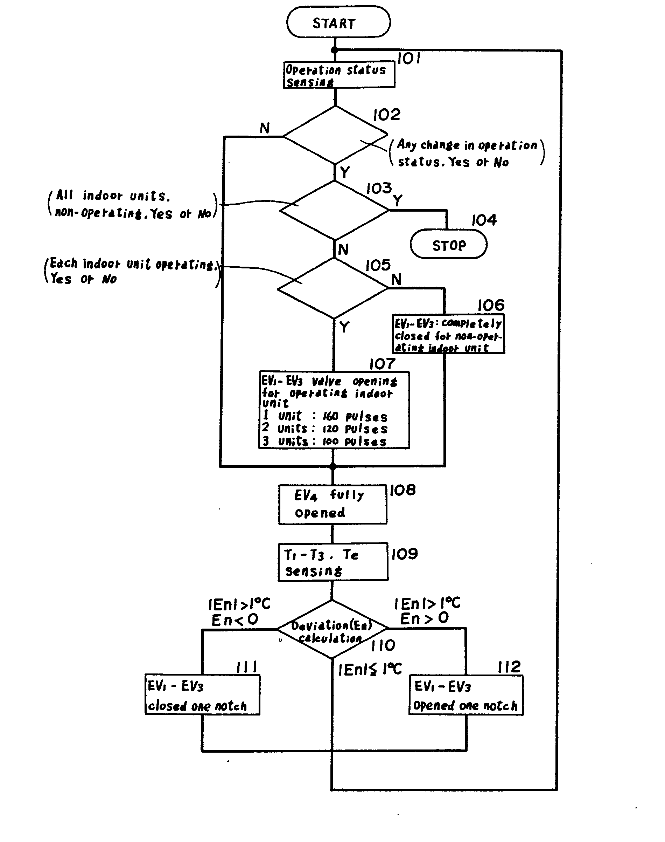

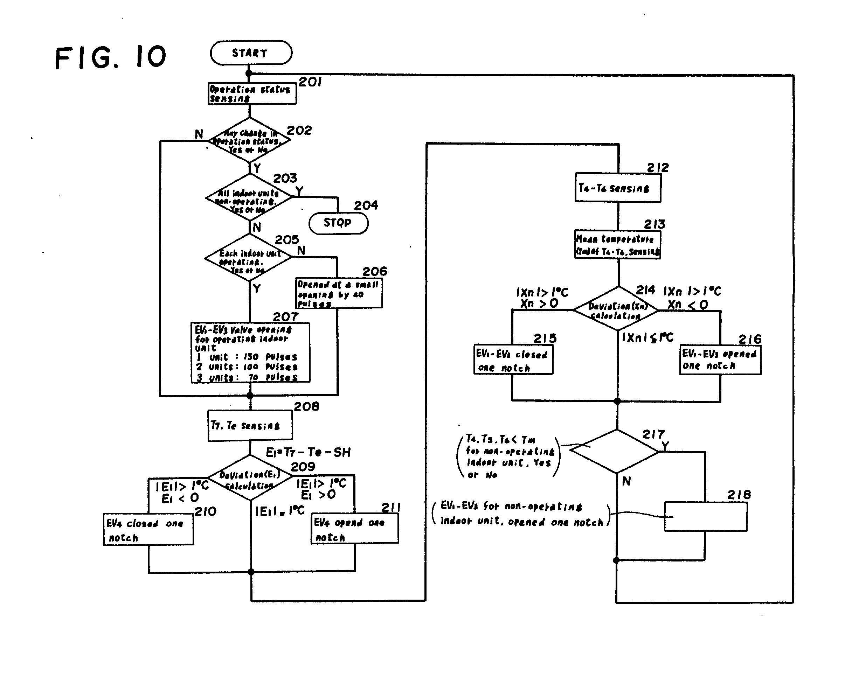

The operation of the first motorized valves $EV_1$—$EV_3$ and second motorized valve $EV_4$ will now be described with reference to the flow charts shown in Fig. 9 and Fig. 10.

In these flow charts, the operation of the first motorized valves $EV_1$—$EV_3$ in the case of all the non-operating indoor units B and the operation of the second motorized valve $EV_4$ during heating are the same as those of the second embodiment and therefore will now be further detailed here (in Fig. 9, these are the steps 101—106, 108; and in Fig. 10 the steps 201—206, 208—211). When any indoor unit B is operating, the numbers of the operating indoor units B are checked at the start of the operation and the first motorized valves $EV_1$—$EV_3$ corresponding to the operating indoor units B are controlled at a predetermined opening and for a predetermined period of time by the pulse number in accordance with the total number of the indoor units B operating (steps 107, 207). This control operation is the same for both cooling and heating operations. After this predetermined period, the operation proceeds as follows. During cooling operations as shown in the flow chart of Fig. 9, the temperatures of low pressure gaseous refrigerant $T_1$—$T_3$ flowing through said gas line branches 7 from the respective operating indoor units B are sensed by the first temperature sensors $TH_1$—$TH_3$ (step 109) and the saturation temperature $Te$ of low pressure gaseous refrigerant is sensed by the second temperature sensor $TH_e$ (step 109). From said low-pressure gaseous refrigerant temperature $T_1$—$T_3$ and said saturation temperature $Te$ thereof, the deviation $E_n$ relative to the target superheat $SH_o$ is calculated in accordance with the formula, $E_n=(T_1, T_2, T_3)-T_e-SH_o$ (step 110). When the absolute value of said deviation $E_n$ is larger than 1 and said deviation $E_n$ is negative, the first motorized valves $EV_1$—$EV_3$ corresponding to the operating indoor units B are modulated one predetermined notch in the closing direction (step 111). When said deviation $E_n$ is positive and larger than 1, the first motorized valves $EV_1$—$EV_3$ are modulated one predetermined notch in the opening direction (step 112). Thereby, the deviation $E_n$ can be controlled within ±1°C of the target superheat $SH_o$ of 0°—3°C at each consumer side heat exchanger 8 outlet.

The first motorized valves $EV_1$—$EV_3$ are controlled by P. Control, P.D. Control or P.I.D. Control with respect to said deviation $E_n$.

During heating operations as shown in the flow chart of Fig. 10, the temperatures of high pressure liquid refrigerant $T_4$—$T_6$ flowing through said liquid line branches from the operating indoor units B are sensed by means of the third temperature sensors $TH_4$—$TH_6$ (step 212). Next, the mean temperature of high pressure liquid refrigerant $Tm$ flowing through said liquid line branches is calculated from the output of these temperature sensors $TH_4$—$TH_6$ (step 213). By comparing this mean temperature $Tm$ with each said high pressure liquid refrigerant temperature $T_4$—$T_6$, the deviation $X_n$, that is, $X_n=(T_4, T_5, T_6)-Tm$ is calculated (step 214). When said deviation is positive and larger than 1, the first motorized valves corresponding to the operating indoor units B are modulated one predetermined notch in the closing direction (step 215) and when said deviation $X_n$ is negative and the absolute value thereof is larger than 1, the first motorized valves are modulated one predetermined notch in the opening direction (step 216). Thereby, high pressure liquid refrigerant temperature $T_4$—$T_6$ at each consumer-side heat exchanger 8 outlet can be maintained within ±1°C of said mean temperature.

Whilst the opening control of said motorized valves $EV_1$—$EV_3$ is conducted by P. Control, PD Control or PID Control with respect to said deviation $X_n$, the minimum pulse number in the closing direction is set at about 50 pulses and the maximum pulse number at about 200 pulses.

In the non-operating indoor units B, high pressure gaseous refrigerant flowing from gaseous line branches 7 and condensing in the consumer-side heat exchangers by natural radiation does not usually cause liquid accumulation because of the slight opening of the first motorized valves $EV_1$—$EV_3$ corresponding to the non-operating indoor units B. However, when the ambient temperature of a non-operating unit B falls, for any reason, down to the external air temperature, natural radiation at the consumer-side heat exchanger of said unit B increases greatly, which results in rapid liquid refrigerant accumulation in the circuit between said consumer-side heat exchanger 8 and the first motorized valve $EV_1$—$EV_3$ because no solenoid valve is mounted in the gas line 7 to shut off refrigerant flow.

In this case, since the first motorized valve $EV_1$—$EV_3$ is slightly open and therefore refrigerant flow rate through said circuit is very small, liquid refrigerant super-cooling increases rapidly.

For this reason, high pressure liquid refrigerant temperature $T_4$—$T_6$ for the non-operating indoor units B is sensed by means of the third temperature sensors $TH_4$—$TH_6$ mounted in said liquid line branches 5 and compared with said mean temperature $Tm$ (step 217). When said high pressure liquid temperature $T_4, T_5, T_6$ is lower than said mean temperature $Tm$, since this means liquid refrigerant accumulation, the first motorized valves $EV_1$—$EV_3$ corresponding to the non-operating indoor units B is controlled so as to open one predetermined notch (step 218). In this case, the modulation of the valve opening is conducted progressively by a small number of pulses e.g. 5 pulses and the lower limit of said modulation is set at said level of 40 pulses and the upper limit at a level of 70 pulses.

In the above controlled third embodiment, it is possible to control adequately, during cooling, superheat at the consumer-side heat exchanger 8 outlet of the operating indoor units $B$ and level, during heating, super-cooling at the consumer-side heat exchanger 8 outlet of the operating indoor units $B$ and thus reduce refrigerant drift into the operating indoor units $B$. When connection pipes connecting each indoor unit $B$ with the outdoor unit differ in length and the locations of the indoor units differ in their elevation (relative to sea level), refrigerant drift takes place because of differential flow resistance. For example, in the case of large flow resistance, the flow rate is reduced and super-cooling increases. In the third embodiment, however, the first motorized valve $EV_1$—$EV_3$ is modulated in the opening direction for indoor units $B$ of higher flow resistance and in the closing direction for the indoor units $B$ of lower flow resistance. In this way, it is possible to reduce refrigerant drift and optimize refrigerant distribution to each indoor unit $B$ even when the system is characterized by factors which can cause refrigerant drift such as differential flow resistance.

Furthermore since super-cooling at the consumer-side heat exchanger 8 outlet of each indoor unit is made close to the predetermined value, it is possible to operate the system efficiently thereby improving EER. Further, since the first motorized valves $EV_1$—$EV_3$ corresponding to the non-operating indoor units $B$ are modulated with reference to the relation between the high pressure liquid refrigerant temperature $T_4$—$T_6$ and said mean temperature $Tm$, liquid refrigerant accumulation in the non-operating indoor units $B$ can be reliably prevented and thereby capacity reduction due to shortage of circulating refrigerant can be avoided.

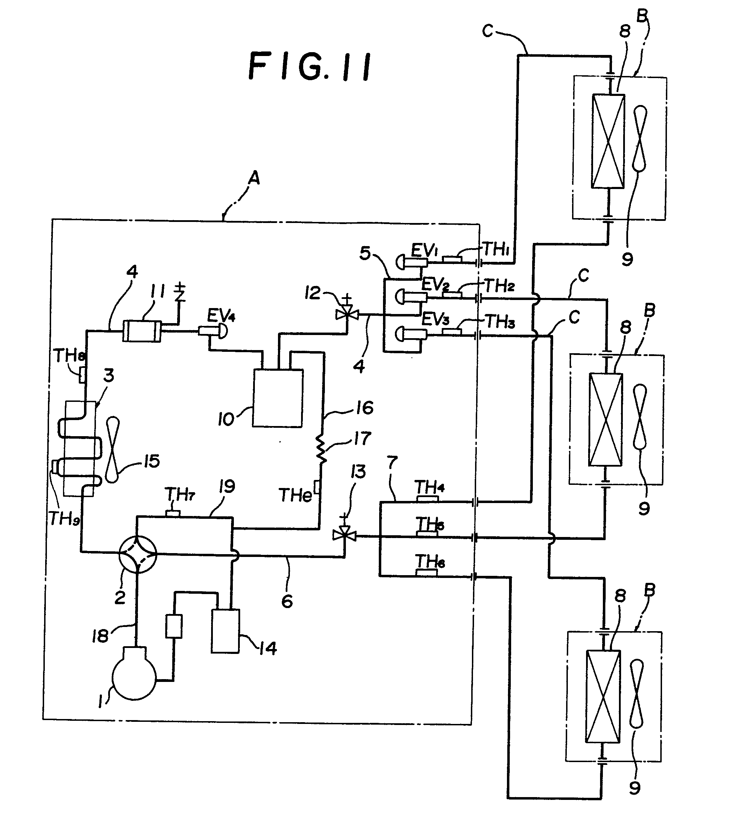

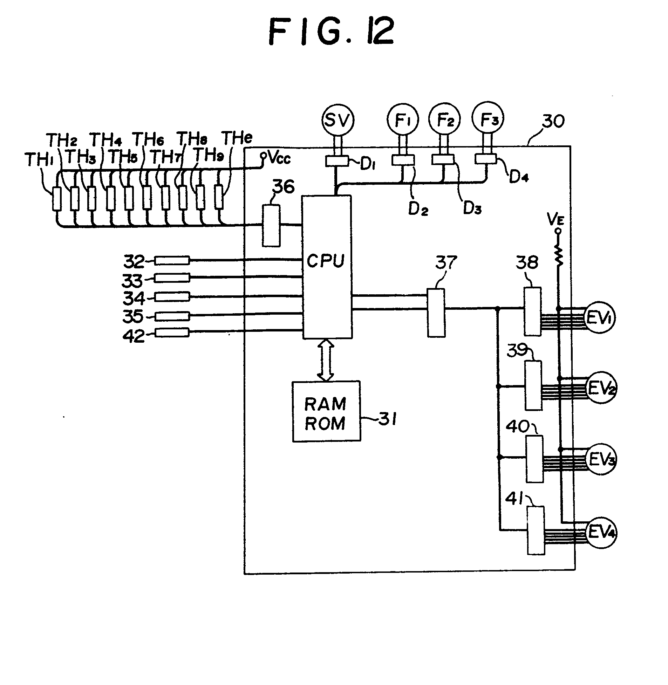

The refrigerant circuit of the fourth embodiment shown in Fig. 11 is basically similar to those of the second and third embodiments shown in Figs. 3 and 7, respectively. The difference is that in the third embodiment shown in Fig. 7, the sixth temperature sensor $TH_8$ and the seventh temperature sensor $TH_9$ are provided, in the liquid line 4, in order to sense respectively, high pressure liquid refrigerant temperature $T_8$ at the supply-side heat exchanger 3 outlet and condensing temperature $T_c$ therein and thereby super-cooling is also controlled using the second motorized valve $EV_4$. Therefore, the control system for the first motorized valves $EV_1$—$EV_3$ and the second motorized valve differs, as shown in Fig. 12, from the control system of the second embodiment in that the sixth and seventh temperature sensors $TH_8$, $TH_9$ and the target super-cooling level $SC$ setter 42 are connected to the input side of said controller 20 and a control means is incorporated in said central processing unit in order to compare the high pressure liquid refrigerant temperature $T_8$ sensed by said sixth

temperature sensor $TH_8$ and said condensing temperature $T_c$ sensed by the seventh temperature sensor $TH_9$ with the temperature $T_{sc}$ satisfying the target super-cooling $SC$ level set by said super-cooling setter 42 and modulate the second motorized valve $EV_4$ so as to obtain said target super-cooling level $SC$.

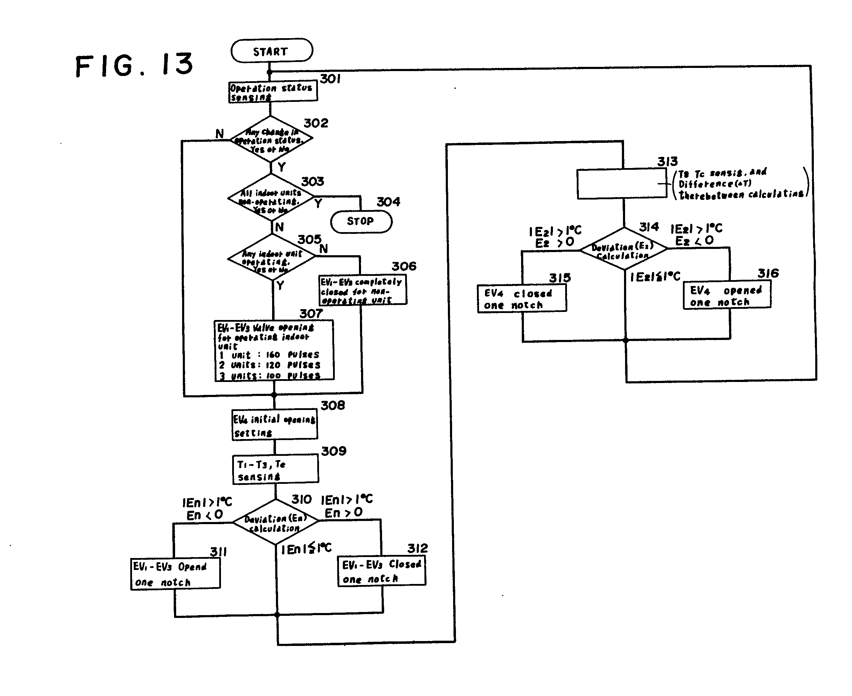

While the control of the first motorized $EV_1$—$EV_3$ in the above described fourth embodiment is the same as that of the third embodiment (step 301—307, step 309—312), the control of the second motorized valve $EV_4$ during cooling is different and therefore only the differences in operation will be explained with reference to the flow chart of Fig. 13.

After setting at the start of the operation to open to a predetermined opening size and for predetermined period of time (for example, 3 minutes), the second motorized valve $EV_4$ is controlled as follows: By sensing the high pressure liquid temperature $T_8$ at the supply-side heat exchanger 3 outlet with the sixth temperature sensor $TH_8$ and the condensing temperature $T_c$ with the seventh temperature sensor $TH_9$, super-cooling ($\Delta T = T_c - T_8$) is calculated (step 313) and the deviation ($E_2 = T_{sc} - \Delta T$) is then calculated by comparing said super-cooling ($\Delta T$) with the temperature $T_{sc}$ satisfying the target super-cooling level $SC$ (step 314). When the deviation $E_2$ is positive and the absolute value thereof larger than 1, the second motorized valve $EV_4$ is modulated so as to close by one notch (step 315) and when it is negative and the absolute value thereof larger than 1, the second motorized valve $EV_4$ is modulated so as to open by one notch (step 316) and thereby super-cooling of said high pressure liquid refrigerant is maintained within ±1°C of the target super-cooling level by controlling the pulse input into the second motorized valve $EV_4$. Instead of steps 313- step 316, the second motorized valve $EV_4$ control may be conducted by first controlling the input pulse number (for example to 180 pulses) so as to obtain the proper degree of opening.

In the fourth embodiment, it is possible to achieve proper super-cooling control during cooling as well as the effect obtained in the third embodiment and thereby improve cooling capacity and EER.

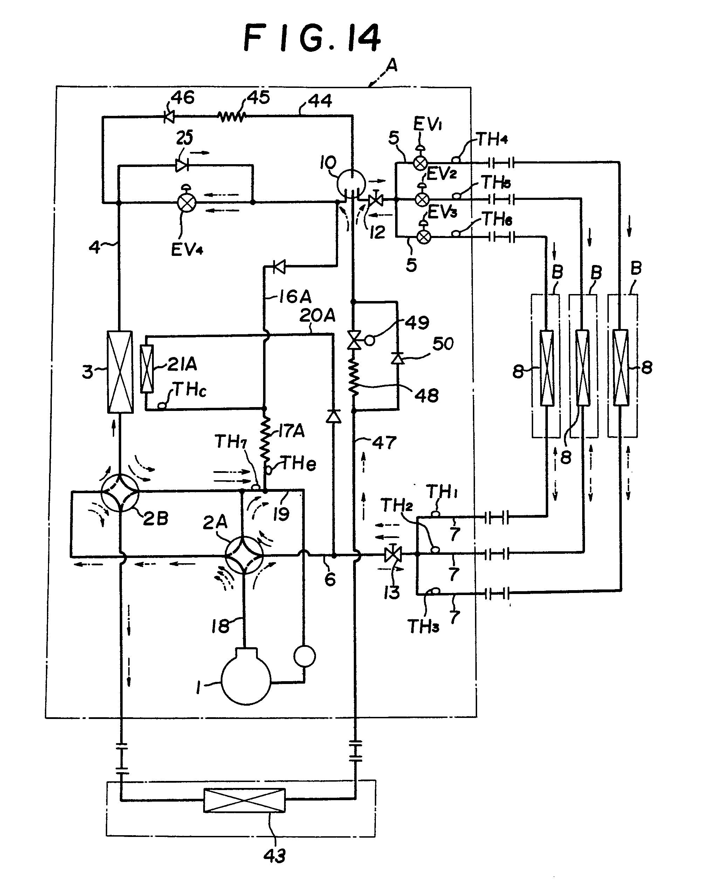

The fifth embodiment shown in Fig. 14 is basically similar to the first embodiment and the main difference from the first embodiment lies in that a parallel circuit of the second motorized valve $EV_4$ and a check valve 25 are, as in the second embodiment, provided in said liquid line main 4 to control low pressure gaseous refrigerant super-heat at the supply-side heat exchanger 3 outlet during heating; two 4-way valves, i.e. first and second 4-way valves 2A, 2B, are provided; a domestic hot water supply heat exchanger 43 is provided between the second four-way valve and a receiver 10; the first sensing circuit 16A has a pressure-reducing device 17A provided between the liquid line main 4 and the suction line 19; and a second sensing circuit 20A has a detector heat exchanger 21A provided with one end connected to the line connecting said pressure reducing device 17A with said liquid line main 4 and its other end to the gas line main 6.

The first temperature sensors $TH_1$—$TH_3$ are mounted in the gas line branches 7, the second temperature sensor $TH_e$ is mounted in the suction pipe 19 connection side of said first sensing circuit 16A, the fourth temperature sensor $TH_c$ is mounted between said detector heat exchanger 21A and pressure reducing device 17A and low pressure gaseous refrigerant super-heat at each consumer-side heat exchanger 8 outlet is controlled, during cooling operations, by controlling the opening of the first motorized valves $EV_1$—$EV_3$ according to the outputs of the third and fourth temperature sensors, and high pressure liquid refrigerant super-cooling at each consumer-side heat exchanger 8 outlet is controlled; during heating operations, by controlling the opening of the second motorized valve $EV_4$ in accordance with the outputs of the second temperature sensor $TH_e$ and the fifth temperature sensor $TH_7$ mounted in the suction line 19. In Fig. 14 is also shown a purging passage for gaseous refrigerant 44 in the receiver 10, which includes a capillary 45 and a check valve 46. Also provided is a domestic hot water supply passage 47 incorporating a capillary tube 48 and a solenoid valve 49 with a check valve 50 mounted in parallel with said capillary tube 48 and solenoid valve 49.

By changing over the two 4-way valves 2A, 2B, refrigerant is conducted for cooling along the route indicated by the full line arrow, for cooling and providing a domestic hot water supply along the route indicated by the dotted line arrow, for domestic hot water supply (alone) along the route indicated by the chain line arrow, and for heating along the route indicated by double chain line arrow.

In the above described first to fifth embodiments, 3 indoor units B are shown connected to one outdoor unit A. The number of these can be readily charged e.g. to 2 or 4. Further, in the first and third to fifth embodiments, whilst said third temperature sensors $TH_4$—$TH_6$ are shown mounted in each liquid line branch 5, these sensors could also be mounted at the consumer-side heat exchanger 8 outlets of the indoor units B during heating operations. While the first temperature sensors $TH_1$—$TH_3$ mounted in each gas line branch may also be mounted at the consumer-side heat exchanger 8 outlet of the indoor units B during cooling operations, the mounting in the gas line branches 7, together with mounting of the second temperature sensor $TH_e$ for sensing low pressure gaseous refrigerant saturation temperature $T_e$ in said sensing circuit 16, 16A of the outdoor unit A, eliminates the need for any wiring between the outdoor and indoor units for signal transmission, and thereby simplifies wiring between the outdoor and indoor units.

## Claims

1. A multi-room type air-conditioning apparatus comprising an outdoor unit (A) which has a compressor (1), a supply-side heat exchanger (3) and a 4-way valve (2) with two high and two low pressure change-over ports, a plurality of indoor units (B) each of which has a consumer-side heat exchanger (8) and a fan (9) attached thereto, each of said indoor units (B) being connected with said outdoor unit by a first and a second connection pipe (C) and is capable of providing cooling and heating by switching of said 4-way valve (2), said apparatus having a liquid refrigerant line main (4) connected to said supply-side heat exchanger (3) for conducting liquid refrigerant, a plurality of liquid line branches (5) branching out of said liquid line main (4), each branch being connected to a said first connection pipe (C), a discharge pipe (18) connecting the compressor with a high pressure change-over port of the 4-way valve (2), a suction pipe (19) connecting the compressor with a low pressure change-over port of the 4-way valve (2), a gaseous refrigerant line main (6) connected to the supply-side heat exchanger (3) for conducting gaseous refrigerant, a plurality of gas line branches (7) branching out of said gas line main (6) and connected to said second connection pipes (C), the 4-way valve being arranged along said gaseous refrigerant line main (6) and in between the supply side heat exchanger (3) and the plurality of gas line branches (7), motorized valves ($EV_1$—$EV_3$) mounted in each of said liquid line branches (5) with continuously variable valve opening control between fully closed and fully open positions, a super-heat control means ($TH_1$—$TH_3$), for low pressure gaseous refrigerant at the consumer-side heat exchanger (8) outlets during cooling operations of the operating indoor units (B) by adjusting an amount of opening between fully closed and a selected open or partially open condition of said motorized valves ($EV_1$—$EV_3$), a super-cool control means ($TH_4$—$TH_6$), for high pressure liquid refrigerant at the consumer-side heat exchanger (8) outlet during heating operations of the operating indoor unit, valve control means provided for each one of said motorized valves ($EV_1$—$EV_3$), each said valve being connected into a respective one of said liquid line branches (5) to an associated indoor unit (B), each valve control means being adapted to operate when the associated indoor unit is non-operating to cause the respective motorized valve to be fully closed during the cooling operation and at least partially open during the heating operation, fan control means formed and arranged for switching off the fans (9) of non-operating indoor units (B) and residual flow valve control means formed and arranged for closing down to a small opening, those of the motorized valves ($EV_1$—$EV_3$) in the liquid line branches (S) connected to non-operating indoor units (B).

2. Apparatus according to claim 1, which includes an operation status sensing means (32) for sensing operation or non-operation of each indoor unit and determining the number of indoor units (B) operating at any given time.

3. Apparatus according to claim 1 or claim 2, which includes an operation mode sensing means (33) for sensing whether the system is in cooling mode or in heating mode.

4. Apparatus according to claim 2 which includes valve control means (30) for controlling the motorized valves ($EV_1$—$EV_3$) mounted in the liquid line branches connected to the operating indoor units (B) to a predetermined opening, in response to the output of said operation sensing means (32) and in accordance with the number of indoor units (B) operating.

5. Apparatus according to claim 3 in which the super-cool control means ($TH_4$—$TH_6$) includes a liquid refrigerant temperature sensing means for sensing high pressure liquid refrigerant temperature at the consumer-side heat exchanger (8) outlets of the indoor units (B) during heating operations; valve control means (30) for opening at the start of heating, said motorized valves ($EV_1$—$EV_3$) mounting in the liquid line branches (5) connected to the operating indoor units (B) to a predetermined opening size for a predetermined period of time in accordance with the output of the operation status sensing means (32) and in accordance with the number of the indoor units (B) operating; processing means (30) for calculating the mean temperature of the liquid refrigerant temperatures ($T_4$—$T_6$) at the consumer-side heat exchanger (8) outlets of the operating indoor units (B) during heating operations, in accordance with the output of said liquid temperature sensing means of the super-cool control means ($TH_4$—$TH_6$); first comparator means for comparing the output of said liquid refrigerant temperature sensing means with the mean temperature ($Tm$) of said liquid refrigerant temperatures ($T_4$—$T_6$); and valve control means for controlling, in accordance with the output of said first comparator means (30), the motorized valves ($EV_1$—$EV_3$) mounted in the liquid line branches connected to the operating indoor units (B) so as to bring the liquid refrigerant temperature at the consumer-side heat exchangers (8) during heating operations of the operating indoor units (B) close to said means temperature ($Tm$).

6. Apparatus according to claim 5, wherein are provided: a second comparator means (30) for comparing the output of said liquid refrigerant temperature sensing means of the super-cool control means ($TH_4$—$TH_6$) for the non-operating indoor units (B) during heating operations with said mean temperature ($Tm$); and modulator means (30) for modulating, when the liquid refrigerant temperature ($T_4$—$T_6$) at the consumer-side heat exchanger (8) outlets during heating operations of the non-operating indoor units (B) is lower than said mean temperature ($Tm$), said motorized valve ($EV_1$—$EV_3$) mounted in the liquid line branches (5) connected to said non-operating indoor units (B) in the direction of opening.

7. Apparatus according to claim 3, which includes a temperature sensing means ($T_1$—$T_3$) sensing low pressure gaseous refrigerant temperature ($T_1$—$T_3$) at said consumer-side heat exchanger (8) outlets during cooling operations of the operating indoor unit (B); valve control means (30) for controlling, at the start of cooling operations, the motorized valves ($EV_1$—$EV_3$) mounted in said liquid line branches (5) connected to the operating indoor indoor units (B) so as to open to a predetermined opening for a predetermined period of time in accordance with the output of gaseous refrigerant temperature sensing means included in the super-heat control means ($TH_1$—$TH_3$); and valve control means (30) for controlling super-heat of low pressure gaseous refrigerant at the consumer-side heat exchanger (8) outlet of the operating indoor units (B) by modulating the motorized valves ($EV_1$—$EV_3$) mounted in the liquid line branches (5) connected to the operating indoor units (B), in accordance with the output of said gaseous refrigerant temperature sensing means of the super-heat control means ($TH_1$—$TH_3$).

8. Apparatus according to claim 3, which includes valve control means (30) for controlling, in accordance with the outputs of said operation mode sensing means (33) and said operation status sensing means (32), the motorized valves ($EV_1$—$EV_3$) mounted in said liquid line branches (5) connected to the indoor units (B) so that, when any one of said units are inoperative the valves are completely closed during cooling operations or opened slightly so as to admit a limited refregerant flow which can condense in the consumer-side heat exchanger (8) of the no-operating indoor unit(s) (B) by natural radiation therefrom, during heating operations.

9. Apparatus according to claim 1, in which the super-heat control means ($TH_1$—$TH_3$) comprises first temperature sensing means for sensing low pressure gaseous refrigerant temperature ($T_1$—$T_3$) at the consumer-side heat exchanger (8) outlets during cooling operations of the operating indoor units (B) and a second temperature sensing means ($TH_e$) for sensing the saturation temperature ($Te$) of said low pressure gaseous refrigerant; and super-heat controlling means (30) for controlling super-heat of low pressure gaseous refrigerant at the consumer-side heat exchanger (8) outlet during cooling operations of the operating indoor units (B) by modulating the opening of the motorized valves ($EV_1$—$EV_3$) in accordance with the output of said super-heat sensing means.

10. Apparatus according to claim 9, wherein said first temperature sensing means consists of a first sensing circuit (16) connected between the liquid line main (4) of the outdoor unit (A) and the suction side (18) of the compressor (1), with a pressure reducing device (17) mounting in between and the second temperature sensing means ($TH_e$) which is provided between the suction side of the pressure reducing device (17) of the first sensing circuit and the suction side (18) of said compressor (1) for sensing the saturation temperature ($Te$) of low pressure gaseous refrigerant and said first temperature sensors of the super-heat control means ($TH_1$—$TH_3$) are mounted in the gas line branches (7) of the outdoor unit ($A$).

11. Apparatus according to claim 1, in which the super-cooling control means ($TH_4$—$TH_6$) comprises a third temperature sensing means for sensing high pressure liquid refrigerant temperature ($T_4$—$T_6$) at the consumer-side heat exchanger (8) outlets of the indoor units ($B$) during heating operations and second temperature sensing means ($TH_c$) for sensing the saturation temperature ($T_c$) of said high pressure liquid refrigerant; and valve control means (30) for controlling super-cooling of high pressure liquid refrigerant at the consumer-side heat exchanger (8) outlets of the operating indoor units ($B$) during heating operations by modulating the valve openings of said motorized valves ($EV_1$—$EV_2$), in accordance with the output of said super-cooling sensing means.

12. Apparatus according to claim 11 wherein the second temperature sensing means consists of a second sensing circuit (20) having a detector heat exchanger (21) and a pressure reducing device (22) and provided between the discharge pipe (18) and connecting the compressor (1) with the 4-way valve (2) and the suction pipe (19) connecting the compressor (1) with said 4-way valve (2) and a fourth temperature sensor ($TH_c$) provided between said detector heat exchanger (21) of the second sensing circuit (20) and said pressure reducing device (22) for sensing saturation temperature ($T_c$) of liquid refrigerant passing through said detector heat exchanger (21) and said third temperature sensing means of the super-heat control means ($TH_1$—$TH_3$) are mounted in the liquid line branches (5) of the outdoor unit ($A$).

13. Apparatus according to claim 1, which includes means for sensing super-heat of low pressure gaseous refrigerant at the supply-side heat exchanger outlet during heating operations; a super-heat control valve mounted in the liquid line main (4) for controlling opening thereof in accordance with the output of said super-heat sensing means: and a liquid receiver mounted between the liquid line branching point and said super-heat control valve.

14. Apparatus according to claim 1, which includes a super-cooling control valve mounted in the liquid line main (4) for controlling super-cooling of high pressure liquid refrigerant at the supply-side heat exchanger (3) outlet during cooling operations; valve control means for controlling the opening of said sub-cool controlling valve in cooling; and a liquid receiver mounted between the liquid line branching point and said sub-cool controlling valve.

15. Apparatus according to any one of claims 3 and 5 to 8 which includes a second motorized valve ($EV_4$) mounted in the liquid line main (4) for controlling refrigerant super-cooling at the supply-side heat exchanger (3) outlet during heating operations and a liquid receiver (10) mounted between said second motorized valve ($EV_4$) and the liquid line branching point.

## Patentansprüche

1. Klimaanlage des Mehrraumtyps, mit einer Außeneinheit (A), die einen Kompressor (1), einen zuströmseitigen Wärmetauscher (3) und ein 4-Wege-Ventil (2) mit zwei Hoch- und zwei Niederdruckumschaltöffnungen hat, einer Anzahl Innenraumeinheiten (B), von denen jede einen verbraucherseitigen Wärmetauscher (8) und einen Ventilator (9) enthält, der an letzterem angebracht ist, wobei jede der Innenraumeinheiten (B) mit der Außeneinheit durch eine erste und eine zweite Verbindungsleitung (C) verbunden ist und in der Lage ist, Kühlung und Erwärmung durch Schalten des 4-Wege-Ventils (2) zu erzeugen, wobei die Vorrichtung eine Flüssigkühlmittelhauptleitung (4), die mit dem zuströmseitigen Wärmetauscher (3) zum Leiten des flüssigen Kühlmittels verbunden ist, eine Anzahl von Flüssigkeitsabzweigleitungen (5), die von der Flüssigkeitshauptleitung (4) abzweigen, wobei jeder Abzweig mit einer ersten Verbindungsleitung (C) verbunden ist, eine Abströmleitung (18) die den Kompressor mit einer Hochdruckumschaltöffnung des 4-Wege-Ventils (2) verbindet, eine Ansaugleitung (19), die den Kompressor mit einer Niederdruckumschaltöffnung des 4-Weg-Ventils (2) verbindet, eine Gaskühlmittelhauptleitung (6), die mit dem zuströmseitigen Wärmetauscher (3) zum Leiten des Gaskühlmittels verbunden ist, eine Anzahl von Gasabzweigleitungen (7), die von der Gashauptleitung (6) abzweigen und die mit den zweiten Verbindungsleitungen (C) verbunden sind, wobei das 4-Weg-Ventil entlang der zuströmseitigen Gaskühlmittelhauptleitung (6) und zwischen dem zuströmseitigen Wärmetauscher (3) und der Anzahl der Gasabzweigleitungen (7) angeordnet ist, in jeder der Flüssigkeitsabzweigleitungen (5) angeordnete motorgetriebene Ventile ($EV_1$—$EV_3$) mit stetig veränderbarer Ventilöffnungssteuerung zwischen vollständig geschlossenen und vollständig geöffneten Stellungen, ein Überhitzungssteuermittel ($TH_1$—$TH_3$) für Niederdruck-Gaskühlmittel an den verbraucherseitigen Auslässen des Wärmetauschers (8) während der Kühlvorgänge der im Betrieb befindlichen Innenraumeinheiten (B) durch Einstellen eines Öffnungsgrades zwischen vollständig geschlossenen und einer ausgewählt offenen oder teilweise offenen Bedingung der motorgetriebenen Ventile ($EV_1$—$EV_2$), ein Unterkühlungssteuermittel ($TH_4$—$TH_6$) für Hochdruck-Flüssigkühlmittel am verbraucherseitigen Auslaß des Wärmetauschers (8) während der Erwärmungsvorgänge der im Betrieb befindlichen Innenraumeinheit, Ventilsteuermittel, die für jedes einzelne der motorgetriebenen ($EV_1$—$EV_3$) vorgesehen sind, wobei jedes Ventil in einer der entsprechenden Flüssigkeitsabzweigleitungen (5) mit einer zugehörigen Innenraumeinheit (B) verbunden ist, wobei jedes Ventilsteuermittel vorgesehen ist, wirksam zu werden, wenn die zugehörige Innenraumeinheit nicht in Betrieb ist, um das entsprechende motorgetriebene Ventil zu veranlassen, während des Kühlvorganges vollständig geschlossen und während des Erwärmungsvorganges zumindest teilweise offen zu sei, Ventilatorsteuermittel zum Abschlaten der Ventilatoren (9) der nicht in Betrieb befindlichen Innenraumeinheiten (B) und verbleibende Durchflußventilsteuermittel aufweist zum Verschließen derjenigen kleinen Öffnung der motorgetriebenen Ventile ($EV_1$—$EV_3$) in den Flüssigkeitsabzweigleitungen (5), die mit den nicht in Betrieb befindlichen Innenraumeinheiten (B) verbunden sind.

2. Vorrichtung nach Anspruch 1, dadurch gekennzeichnet, daß diese ein Operationsstatuserfassungsmittel (32) zum Erfassen des Inbetriebseins oder Nichtinbetriebseins jeder Innenraumeinheit und zum Bestimmen der Anzahl der Innenraumeinheiten (B), die zu irgendeiner bestimmten Zeit in Betrieb sind, einschließt.

3. Vorrichtung nach Anspruch 1 oder 2, dadurch gekennzeichnet, daß diese ein Operationsmoduserfassungsmittel (33) zum Erfassen, ob sich das System im Kühlungsmodus oder im Erwärmungsmodus befindet, einschließt.

4. Vorrichtung nach Anspruch 2, dadurch gekennzeichnet, daß diese ein Ventilsteuermittel (30) an einer vorbestimmten Öffnung zum Steuern der motorgetriebenen Ventile ($EV_1$—$EV_3$) einschließt, die in den Flüssigkeitsabzweigleitungen angeordnet sind, die mit den Betrieb befindlichen Innenraumeinheiten (B) verbunden sind in Antwort auf den Ausgang des Operationserfassungsmittels (32) und in Abhängigkeit von der Anzahl der sich im Betrieb befindlichen Innenraumeinheiten (B).

5. Vorrichtung nach Anspruch 3, gekennzeichnet dadurch, daß das Unterkühlungssteuermittel ($TH_4$—$TH_6$) ein Flüssigkühlmittel-Temperaturerfassungsmittel zum Erfassen der Hochdruck-Flüssigkühlmitteltemperatur an den verbraucherseitigen Ausläßen des Wärmetauschers (8) der Innenraumeinheiten (B) während der Erwärmungsvorgänge, Ventilsteuermittel (30) zum Öffnen bei Beginn der Erwärmung, wobei die motorgetriebenen Ventile ($EV_1$—$EV_3$), die in den mit den Betrieb befindlichen Innenraumeinheiten (B) verbundenen Flüssigkeitsabzweigleitungen (5) angeordnet sind, auf eine vorbestimmte Öffnungsgröße für eine vorbestimmte Zeitdauer entsprechend der Ausgangsgröße des Operationsstatuserfassungsmittels (32) und entsprechend der Anzahl der in Betrieb befindlichen Innenraumeinheiten (B) öffnen, Prozeßsteuermittel (30) zur Berechnung der Durchschnittstemperatur der Flüssigkühlmitteltemperaturen ($T_4$—$T_6$) an den verbraucherseitigen Ausläßen des Wärmetauschers (8) der in Betrieb befindlichen Innenraumeinheiten (B) während der Erwärmungsvorgänge entsprechend der Ausgangsgröße des Flüssigkeitstemperaturerfassungsmittels des Unterkühlungssteuermittels ($TH_4$—$TH_6$), ein erstes Vergleichsmittel zum Vergleichen der Ausgangsgröße des Flüssigkühlmittel-Temperaturerfassungsmittels mit der Durchschnittstemperatur ($T_m$) der Flüssigkühlmitteltem-

peraturen ($T_4$—$T_6$) und Ventilsteuermittel zum Steuern der motorgetriebenen Ventile ($EV_1$—$EV_3$) aufweist, die in den mit den in Betrieb befindlichen Innenraumeinheiten (B) verbundenen Flüssigkeitsabzweigleitungen angeordnet sind, entsprechend der Ausgangsgröße der ersten Vergleichsmittel (30), um die Flüssigkühlmitteltemperatur am verbraucherseitigen Wärmetauscher (8) während der Erwärmungsvorgänge der in Betrieb befindlichen Innenraumeinheiten (B) nahe der Durchschnittstemperatuur ($T_m$) zu bringen.

6. Vorrichtung nach Anspruch 5, gekennzeichnet durch ein zweites Vergleichsmittel (30) zum Vergleichen der Ausgangsgröße des Flüssigkühlmittel-Temperaturerfassungsmittels des Unterkühlungssteuermittels ($TH_4$—$TH_6$) für die nicht in Betrieb befindlichen Innenraumeinheiten (B) während der Erwärmungsvorgänge mit der Durchschnittstemperatur ($T_m$) und Modulatormitteln (30) zur Modulation des motorgetriebenen Ventils ($EV_1$—$EV_3$), das in der mit den nicht in Betrieb befindlichen Innenraumeinheiten (B) in Richtung der Öffnung verbundenen Flüssigkeitsabzweigleitungen (5) angeordnet ist, wenn die Flüssigkühlmitteltemperatur ($T_4$—$T_6$) an den verbraucherseitigen Ausläßen des Wärmetauschers (8) während der Erwärmungsverfahren der nicht in Betrieb befindlichen Innenraumeinheiten (B) niedriger ist als die Durchschnittstemperatur ($T_m$).

7. Vorrichtung nach Anspruch 3, dadurch gekennzeichnet, daß diese ein Temperaturerfassungsmittel ($T_1$—$T_3$) zum Erfassen der Niederdruck-Gaskühlmitteltemperatur ($T_1$—$T_3$) an den verbraucherseitigen Ausläßen des Wärmetauschers (8) während der Kühlvorgänge der in Betrieb befindlichen Innenraumeinheiten (B); Ventilsteuermittel (30) zum Steuern der motorgetriebenen Ventile ($EV_1$—$EV_3$) am Beginn der Kühlvorgänge, die in dem mit den in Betrieb befindlichen Innenraumeinheiten (B), verbundenen Flüssigkeitsabzweigleitungen (5) angeordnet sind, um eine vorbestimmte Öffnung für eine vorbestimmte Zeitdauer in Abhängigkeit vom Ausgangswert des Gaskühlmittel-Temperaturerfassungsmittels zu öffnen, die im Überhitzungssteuermittel ($TH_1$—$TH_3$) eingeschlossen ist und Ventilsteuermittel (30) zum Steuern der Überhitzung des Niederdruck-Gaskühlmittels am verbraucherseitigen Auslaß des Wärmetauschers (8) der in Betrieb befindlichen Innenraumeinheiten (B) durch Modulieren der motorgetriebenen Ventile ($EV_1$—$EV_3$) einschließt, die in den mit den in Betrieb befindlichen Innenraumeinheiten (B) verbundenen Flüssigkeitsabzweigleitungen (5) angeordnet sind, entsprechend der Ausgangsgröße des Gaskühlmittel-Temperaturerfassungsmittels des Überhitzungssteuermittels ($TH_1$—$TH_3$).

8. Vorrichtung nach Anspruch 3, dadurch gekennzeichnet, daß diese Ventilsteuermittel (30) zum Steuern der motorgetriebenen Ventile ($EV_1$—$EV_3$) einschließt, die in den mit den Innenraumeinheiten (B) verbundenen Flüssigkeitsabzweigleitungen (5) angeordnet sind, entsprechend den Ausgangsgrößen des Operationsmoduserfassungsmittels (33) und des Operationsstatuserfassungsmittels (32), so daß, wenn irgendeine der Einheiten außer Betrieb ist, die Ventile vollständig während der Kühlvorgänge geschlossen oder geringfügig geöffnet werden um einen betrenzten Kühlmittelfluß einzulassen, der im verbraucherseitigen Wärmetauscher (8) der nicht in Betrieb befindlichen Innenraumeinheiten (B) durch natürliche Abstrahlung während der Erwärmungsvorgänge kondensieren kann.

9. Vorrichtung nach Anspruch 1, dadurch gekennzeichnet, daß das Überhitzungssteuermittel (TH$_1$—TH$_3$) ein erstes Temperaturerfassungsmittel zum Erfassen der Niederdruck-Gaskühlmitteltemperatur (T$_1$—T$_3$) an den verbraucherseitigen Auslässen des Wärmetauschers (8) während der Kühlvorgange der in der in Betrieb befindlichen Innenraumeinheiten (B) und ein zweites Temperaturerfassungsmittel (TH$_e$) zum Erfassen der Sättigungstemperatur (T$_e$) des Niederdruck-Gaskühlmittels und Überhitzungssteuermittel (30) zum Steuern der Überhitzung des Niederdruck-Gaskühlmittels am verbraucherseitigen Auslaß des Wärmtauschers (8) während der Kühlvorgänge der in Betrieb befindlichen Innenraumeinheiten (B) durch Modulieren der Öffnung der motorgetriebenen Ventile (EV$_1$—EV$_3$) in Abhängigkeit vom Ausgangswert des Überhitzungserfassungsmittels aufweist.

10. Vorrichtung nach Anspruch 9, durch gekennzeichnet, daß das erste Temperaturerfassungmittel aus einem ersten Erfassungselement (16) das zwischen der Flüssigkeitshauptleitung (4) der Außenraumeinheit (A) und der Ansaugseite (18) des Kompressors (1) verbunden ist, mit einer Druckminderungseinrichtung (17) besteht, die zwischen diesem und dem zweiten Temperaturerfassungsmittel (TH$_e$) angeordnet ist, und das zwischen der Ansaugseite der Druckminderungseinrichtungen (17) des ersten Erfassungselementes und der Ansaugseite (18) des Kompressors (1) zum Erfassen der Sättigungstemperatur (T$_e$) des Niederdruck-Kühlmittels und der ersten Temperatursensoren des Überhitzungssteuermittels (TH$_1$—TH$_3$) angeordnet ist, die sich in den Gasabzweigleitungen (7) der Außenraumeinheit (A) befinden.

11. Vorrichtung nach Anspruch 1, dadurch gekennzeichnet, daß das Unterkühlungssteuermittel (TH$_4$—TH$_6$) ein drittes Temperaturerfassungsmittel zum Erfassen der Hochdruck-Flüssigkühlmitteltemperatur (T$_4$—T$_6$) an den verbraucherseitigen Auläßen des Wärmetauschers (8) der Innenraumeinheiten (B) während der Erwärmungsvorgänge und ein zweites Temperaturerfassungsmittel (TH$_c$) zum Erfassen der Sättigungstemperatur (T$_c$) des Hochdruck-Flüssigkühlmittels und Ventilsteuermittel zum Steuern der Unterkühlung des Hochdruck-Flüssigkühlmittels an den verbraucherseitigen Ausläßen des Wärmetauschers (8) der in Betrieb befindlichen Innenraumeinheiten (B) während der Erwärmungsvorgänge durch Modulieren der Ventilöffnungen der motorgetriebenen Ventile (EV$_1$—EV$_2$) in Abhängigkeit vom Ausgangswert des Unterkühlungserfassungsmittels aufweist.

12. Vorrichtung nach Anspruch 11, dadurch gekennzeichnet, daß das zweite Temperaturerfassungsmittel aus einem zweiten Erfassungselement (20) mit einem Detektorwärmetauscher (21) und einer Druckminderungseinrichtung (22) besteht und zwischen der Ausströmleitung (18), die den Kompressor (1) mit dem 4-Wege-Ventil (2) und mit der Ansaugleitung (19) verbindet, die den Kompressor (1) mit dem 4-Wege-Ventil (2) verbindet, und einem vierten Temperaturerfassungssensor (TH$_c$) angeordnet ist, der zwischen dem Detektorwärmetauscher (21) des zweiten Erfassungselementes (20) und der Druckminderungseinrichtung (22) zum Erfassen der Sättigungstemperatur (T$_c$) des Flüssigkühlmittels, das durch den Detektorwärmetauscher (21) fließt, vorgesehen ist, wobei die dritten Temperaturerfassungsmittel des Überhitzungssteuermittels (TH$_1$—TH$_3$) in den Flüssigkeitsabzweigleitungen (5) der Außenraumeinheit (A) angeordnet sind.

13. Vorrichtung nach Anspruch 1, dadurch gekennzeichnet, daß sie Mittel zum Erfassen der Überhitzung des Niederdruck-Gaskühlmittels am zuströmseitigen Wärmetauscherauslaß während der Erwärmungsvorgänge, ein Überhitzungssteuerventil, das in der Flüssigkeitshauptleitung (4) zum Steuern seiner Öffnung entsprechend der Ausgangsgröße des Überhitzungserfassungsmittels und einen Flüssigkeitsaufnehmer einschließt, der zwischen dem Flüssigkeitsabzweigleitungspunkt und dem Überhitzungssteuerventil angeordnet ist.

14. Vorrichtung nach Anspruch 1, dadurch gekennzeichnet, daß sie ein Unterkühlungssteuermittel, das in der Flüssigkeitshauptleitung (4) zum Steuern der Unterkühlung des Hochdruck-Flüssigkühlmittels am zuströmseitigen Auslaß des Wärmetauschers (3) während der Kühlungsvorgänge, Ventilsteuermittel zum Steuern der Öffnung des Hilfskühlungssteuerventil beim Kühlen und einen Flüssigkeitsaufnehmer einschlißet, der zwischen dem Flüssigkeitsabzweigleitungspunkt und dem Hilfskühlungssteuerventil angeordnet ist.

15. Vorrichtung nach einem der Ansprüche 3 und 5 bis 8, dadurch gekennzeichnet, daß diese ein zweites motorgetriebenes Ventil (EV$_4$), das in der Flüssigkeitshauptleitung (4) zum Steuern der Kühlmittelunterkühlung am zuströmseitigen Auslaß des Wärmetauschers (3) während der Erwärmungsvorgänge, und einen Flüssigkeitsaufnehmer (10) einschließt, der zwischen dem ersten motorgetriebenen Ventil (EV$_4$) und dem Flüssigkeitsabzweigleitungspunkt angeordnet ist.

## Revendications

1. Appareil de conditionnement d'air du type pour locaux multiples, comprenant un groupe extérieur (A) qui comporte un compresseur (1), un échangeur de chaleur côté alimentation (3) et une vanne à quatre voies (2) ayant deux orifices de permutation de haute pression et deux orifices de permutation de basse pression, une pluralité de groupes intérieurs (B) dont chacun comporte un échangeur de chaleur côté utilisation (8) et un ventilateur (9) associé à ce dernier, chacun desdits groupes intérieurs (B) étant connecté audit groupe extérieur par un premier et un deuxième tuyaux de liaison (C) et pouvant fournir un refroidissement et un chauffage par commutation de ladite vanne à quatre voies (2), ledit appareil comprenant un collecteur de réfrigérant liquide (4) raccordé audit échangeur de chaleur côté alimentation (3) pour conduire un fluide réfrigérant liquide, une pluralité de tuyaux de branchement de liquide (5) en dérivation à partir dudit collecteur de liquide (4), chaque tuyau de branchement étant raccordé à undit premier tuyau de liaison (C), un tuyau de refoulement (18) reliant le compresseur à un orifice de commutation de haute pression de la vanne à quatre voies (2), un tuyau d'aspiration (19) reliant le compresseur à un orifice de permutation de basse pression de la vanne à quatre voies (2), un collecteur de réfrigérant gazeux (6) raccordé à l'échangeur de chaleur côté alimentation (3) pour conduire un fluide réfrigérant gazeux, une pluralité de tuyaux de branchement de gaz (7) en dérivation à partir dudit collecteur de gaz (6) et raccordés auxdits deuxièmes tuyaux de liaison (C), la vanne à quatre voies étant montée dans ledit collecteur de réfrigérant gazeux (6) et entre l'échangeur de chaleur côté alimentation (3) et la pluralité de tuyaux de branchement de gaz (7), des vannes motorisées (EV₁—EV₃) montées dans chacun desdits tuyaux de branchement de liquide (5) avec une commande d'ouverture de vanne continuellement variable entre une position de fermeture complète et une position d'ouverture complète, des moyens de réglage de surchauffe (TH₁—TH₃) pour le réfrigérant gazeux à basse pression aux sorties des échangeurs de chaleur côté utilisation (8) pendant le fonctionnement en refroidissement des groupes intérieurs en service (B) par réglage d'un degré d'ouverture entre un état entièrement fermé et un état choisi d'ouverture ou d'ouverture partielle des dites vannes motorisées (EV₁—EV₃), des moyens de réglage de sur-refroidissement (TH₄—TH₆) pour le réfrigérant liquide à haute pression aux sorties des échangeurs de chaleur côté utilisation (8) pendant le fonctionnement en chauffage des groupes intérieurs en service, des organes de commande de vanne prévus pour chacune desdites vannes motorisées (EV₁—EV₃), chaque dite vanne étant incorporée dans un tuyau respectif desdits tuyaux de branchement de liquide (5) vers un groupe intérieur associé (B), chaque organe de commande de vanne étant prévu pour fonctionner lorsque le groupe intérieur associé n'est pas en service de manière à ce que la vanne motorisée respective soit complètement fermée pendant le fonctionnement en refroidissement et au moins partiellement ouverte pendant le fonctionnement en chauffage, des moyens de commande de ventilateur prévus et agencés pour arrêter les ventilateurs (9) des groupes intérieurs (B) non en service, et des moyens de réglage de débit résiduel de vanne prévus et agencés pour réduire à une faible ouverture celles des vannes motorisées (EV₁—EV₃) placées dans les tuyaux de branchement de liquide (5) raccordés aux groupes intérieurs non en service (B).

2. Appareil suivant la revendication 1, qui comprend des moyens de détection d'état de fonctionnement (32) pour détecter le fonctionnement ou le non fonctionnement de chaque groupe intérieur et déterminer le nombre de groupes intérieurs (B) en service à tout instant donné.

3. Appareil suivant la revendication 1 ou la revendication 2, qui comprend des moyens de détection de mode de fonctionnement (33) pour détecter si le système est en mode de refroidissement ou en mode de chauffage.

4. Appareil suivant la revendication 2, qui comprend des moyens de commande de vanne (30) pour commander les vannes motorisées (EV₁—EV₃), montées dans les tuyaux de branchement de liquide connectés aux groupes intérieurs en service (B), à une ouverture prédéterminée, en réponse à la sortie desdits moyens de détection de fonctionnement (32) et en fonction du nombre de groupes intérieurs (B) en service.

5. Appareil suivant la revendication 3, dans lequel les moyens de réglage de sur-refroidissement (TH₄—TH₆) comprennent des moyens de détection de température de réfrigérant liquide pour détecter la température du fluide réfrigérant liquide à haute pression aux sorties des échangeurs de chaleur côté utilisation (8) des groupes intérieurs (B) pendant les opérations de chauffage; des moyens de commande de vanne (30) pour ouvrir au début du chauffage lesdites vannes motorisées (EV₁—EV₃) montées dans les tuyaux de branchement de liquide (5) raccordées aux groupes intérieurs en service (B), à une dimension d'ouverture prédéterminée et pendant une durée prédéterminée en fonction de la sortie des moyens de détection d'état de fonctionnement (32) et en fonction du nombre de groupes intérieurs (B) en service; des moyens de traitement (30) pour calculer la température moyenne des températures du réfrigérant liquide (T₄—T₆) aux sorties des échangeurs de chaleur côté utilisation (8) des groupes intérieurs en service (B) pendant les opérations de chauffage, en fonction de la sortie desdits moyens de détection de température de liquide des moyens de réglage de sur-refroidissement (TH₄—TH₆); des premiers moyens de comparaison pour comparer la sortie desdites moyens de détection de température de réfrigérant liquide avec la température moyenne (Tm) desdites températures de réfrigérant liquide (T₄—T₆); et des moyens de commande de vanne pour commander, en fonction de la sortie desdits premiers moyens de comparaison (30), les vannes motorisées (EV₁—EV₃) montées dans les tuyaux de branchement de liquide connectés aux groupes intérieurs en service (B) de façon à amener la température du réfrigérant liquide, à la sortie des échangeurs de chaleur côté utilisation (8) pendant les opérations de chauffage des groupes intérieurs en service (B), à une valeur proche de ladite température moyenne (Tm).

6. Appareil suivant la revendication 5, dans lequel sont prévus: des deuxièmes moyens de comparaison (30) pour comparer la sortie desdits moyens de détection de température de réfrigérant liquide des moyens de réglage de sur-refroidissement ($TH_4$—$TH_6$), pour les groupes intérieurs (B) non en service pendant les opérations de chauffage, avec ladite température moyenne (Tm); et des moyens de modulation (30) pour moduler, lorsque la température du réfrigérant liquide ($T_4$—$T_6$) aux sorties des échangeurs de chaleur côté utilisation (8) pendant les opérations de chauffage des groupes intérieurs (B) non en service est inférieure à ladite température moyenne (Tm), lesdits vannes motorisées ($EV_1$—$EV_3$) montées dans les tuyaux de branchement de liquide (5) connectés auxdits groupes intérieurs (B) non en service, dans le sens de l'ouverture.

7. Appareil suivant la revendication 3, qui comprend des moyens de détection de température ($T_1$—$T_3$) pour détecter la température du réfrigérant gazeux à basse pression ($T_1$—$T_3$) auxdites sorties des échangeurs de chaleur côté utilisation (8) pendant les opérations de refroidissement du groupe intérieur en service (B); des moyens de commande de vanne (30) pour commander, au début des opérations de refroidissement, les vannes motorisées ($EV_1$—$EV_3$) montées dans lesdits tuyaux de branchement de liquide (5) connectés aux groupes intérieurs (B) en service de façon à les ouvrir à une ouverture prédéterminée pendant une durée prédéterminée en fonction de la sortie des moyens de détection de température de réfrigérant gazeux inclus dans les moyens de réglage de surchauffe ($TH_1$—$TH_3$); et des moyens de commande de vanne (30) pour régler la surchauffe du réfrigérant gazeux à basse pression à la sortie de l'échangeur de chaleur côté utilisation (8) des groupes intérieurs en service (B) par modulation des vannes motorisées ($EV_1$—$EV_3$) montées dans les tuyaux de branchement de liquide (5) connectés aux groupes intérieurs en service (B), en fonction de la sortie des dits moyens de détection de température de réfrigérant gazeux des moyens de réglage du surchauffe ($TH_1$—$TH_3$).

8. Appareil suivant la revendication 3, qui comprend des moyens de commande de vanne (30) pour commander, en fonction des sorties desdits moyens de détection de mode de fonctionnement (33) et desdits moyens de détection d'état de fonctionnement (32), les vannes motorisées ($EV_1$—$EV_3$) montées dans lesdits tuyaux de branchement de liquide (5) connectés aux groupes intérieurs (B) de sorte que, lorsque certains desdits groupes ne sont pas en service, les vannes sont complètement fermées pendant les opérations de refroidissement ou légèrement ouvertes de façon à admettre un débit limité de réfrigérant qui peut se condenser dans l'échangeur de chaleur côté utilisation (8) du groupe ou des groupes non en service (B) par rayonnement naturel de celui-ci, pendant les opérations de chauffage.

9. Appareil suivant la revendication 1, dans lequel les moyens de réglage de surchauffe ($TH_1$—$TH_3$) comprennent des premiers moyens de détection de température pour détecter la température de réfrigérant gazeux à basse pression ($T_1$—$T_3$) aux sorties des échangeurs de chaleur côté utilisation (8) pendant les opérations de refroidissement des groupes intérieurs en service (B) et des deuxièmes moyens de détection de température ($TH_e$) pour détecter la température de saturation ($T_e$) dudit réfrigérant gazeux à basse presion; et des moyens de réglage de surchauffe (30) pour régler la surchauffe du réfrigérant gazeux à basse pression à la sortie de l'échangeur de chaleur côté utilisation (8) pendant les opérations de refroidissement des groupes intérieurs en service (B), par modulation de l'ouverture des vannes motorisées ($EV_1$—$EV_3$) en fonction de la sortie desdits moyens de détection de surchauffe.

10. Appareil suivant la revendication 9, dans lequel lesdits premiers moyens de détection de température consistent en un premier circuit de détection (16) connecté entre le collecteur de liquide (4) du groupe extérieur (A) et le côté aspiration (18) du compresseur (1), un dispositif de réduction de pression (17) étant monté entre ce premier circuit et les deuxièmes moyens de détection de température ($TH_e$) qui sont prévus entre le côté aspiration du dispositif de réduction de réduction de pression (17) du premier circuit de détection et le côté aspiration (18) dudit compresseur (1) pour détecter a température de saturation ($T_e$) du réfrigérant gazeux à basse pression, et lesdits premiers capteurs de température des moyens de réglage de surchauffe ($TH_1$—$TH_3$) sont montés dans les tuyaux de branchement de gaz (7) du groupe extérieur (A).

11. Appareil suivant la revendication 1, dans lequel les moyens de réglage de sur-refroidissement ($TH_4$—$TH_6$) comprennent des troisièmes moyens de détection de température pour détecter la température du réfrigérant liquide à haute pression ($T_4$—$T_6$) aux sorties des échangeurs de chaleur côté utilisation (8) des groupes intérieurs (B) pendant les opérations de chauffage et des deuxièmes moyens de détection de température ($TH_c$) pour détecter la température de saturation ($T_c$) dudit réfrigérant liquide à haute pression; et des moyens de commande de vanne (30) pour régler le sur-refroidissement du réfrigérant liquide à haute pression aux sorties des échangeurs de chaleur côté utilisation (8) des groupes intérieurs en service (B) pendant les opérations de chauffage, par modulation de l'ouverture de vanne desdites vannes motorisées ($EV_1$—$EV_3$) en fonction de la sortie desdits moyens de détection de sur-refroidissement.

12. Appareil suivant la revendication 11, dans lequel les deuxièmes moyens de détection de température consistent en un deuxième circuit de détection (20), comportant un échangeur de chaleur de détecteur (21) et un dispositif de réduction de pression (22) et disposé entre le tuyau de refoulement (18) reliant le compresseur (1) à la vanne à quatre voies (2) et le tuyau d'aspiration (19) reliant le compresseur (1) à ladite vanne à quatre voies (2), et un quatrième capteur de température ($TH_o$) placé entre ledit échangeur de chaleur de détecteur (21) du deuxième circuit de détection (20) et ledit dispositif de réduction de pression (22) pour détecter la température de saturation ($T_o$) du réfrigérant liquide qui traverse ledit échangeur de chaleur de détecteur (21), et lesdits troisièmes moyens de détection de température des moyens de réglage de surchauffe ($TH_1$—$TH_3$) sont montés dans les tuyaux de branchement de liquide (5) du groupe extérieur ($A$).

13. Appareil suivant la revendication 1, qui comprend des moyens de détection de la surchauffe du réfrigérant gazeux à basse pression à la sortie de l'échangeur de chaleur côté alimentation pendant les opérations de chauffage; une vanne de réglage de surchauffe montée dans le collecteur de liquide (4) pour régler son ouverture en fonction de la sortie desdits moyens de détection de surchauffe; et un récepteur de liquide monté entre le point de branchement de liquide et ladite vanne de réglage de surchauffe.

14. Appareil suivant la revendication 1, qui comprend une vanne de réglage de sur-refroidissement montée dans le collecteur de liquide (4) pour régler le sur-refroidissement du réfrigérant liquide à haute pression à la sortie de l'échangeur de chaleur côté alimentation (3) pendant les opérations de refroidissement; des moyens de commande de vanne pour commander l'ouverture de ladite vanne de réglage de sur-refroidissement, en refroidissement; et un récepteur de liquide monté entre le point de branchement de ligne de liquide et ladite vanne de réglage de sur-refroidissement.

15. Appareil suivant l'une quelconque des revendications 3 et 5 à 8, qui comprend une deuxième vanne motorisée ($EV_4$) montée dans le collecteur ce liquide (4) pour régler le sur-refroidissement du réfrigérant à la sortie de l'échangeur de chaleur côté alimentation (3) pendant les opérations de chauffage, et un récepteur de liquide (10) monté entre ladite deuxième vanne motorisée ($EV_4$) et le point de branchement des tuyaux de liquide.

EP 0 188 630 B1

F I G. 1

# F I G. 2

# F I G. 4

2

# F I G. 3

# FIG. 5

START

Operation status sensing | 101

Any change in operation status. Yes or No | 102

N

Y

All indoor units non-operating. Yes or No | 103 Y

STOP | 104

N

Each indoor unit operating. Yes or No | 105 N

Y

EV₁-EV₃: completely closed for non-operating indoor unit | 106

EV₁-EV₃ valve opening for operating indoor unit
1 unit : 160 pulses
2 units: 120 pulses
3 units: 100 pulses | 107

EV₄ fully opened | 108

4

# FIG.6

START

| 201 Operation status Sensing |

202 Any change in operation status Yes or No → N

Y

203 All indoor units non-operating. Yes or No → Y

204 STOP

N

205 Any indoor unit operating. Yes or No → N

206 Slightly opened by 40 Pulses

207 EV₁-EV₃ valve opening for operating indoor unit
1 unit : 160 Pulses
2 units: 120 Pulses
3 units: 100 Pulses

208 T7, Te sensing

$E_1 = T_7 - Te - SH$

Deviation($E_1$) calculation 209

$|E_1| > 1°C$
$E_1 < 0$

$|E_1| > 1°C$ $E_1 > 0$

$|E_1| \leq 1°C$

210 EV₄ closed one notch

211 EV₄ opend one notch

# F I G. 7

# FIG. 8

**START**

Operation status Sensing — 101

102 — Any change in operation status. Yes or No — N / Y

All indoor units. non-operating. Yes or No — 103 Y / N

STOP — 104

Each indoor unit operating. Yes or No — 105 N / Y

EV₁-EV₃: completely closed for non-operating indoor unit — 106

EV₁-EV₃ valve opening for operating indoor unit
1 unit : 160 pulses
2 units : 120 pulses
3 units : 100 pulses — 107

EV₄ fully opened — 108

T₁-T₃, Te Sensing — 109

Deviation(En) calculation — 110

|En|>1°C  En<0 — 111 — EV₁-EV₃ closed one notch

|En|≤1°C

|En|>1°C  En>0 — 112 — EV₁-EV₃ opened one notch

FIG. 10

START

201 Operation status sensing

202 Any change in operation status. Yes or No

203 All indoor units non-operating. Yes or No — Y → 204 STOP

205 Each indoor unit operating. Yes or No

206 Opened at a small opening by 40 pulses

207 EV₁-EV₃ Valve opening for operating indoor unit.
1 unit : 150 pulses
2 units : 100 pulses
3 units : 70 pulses

208 T₇, Tc sensing

209 Deviation(Eᵢ) calculation    Eᵢ = T₇ − Tc − SH
  |Eᵢ| > 1°C, Eᵢ < 0 → 210 EV₄ closed one notch
  |Eᵢ| ≦ 1°C
  |Eᵢ| > 1°C, Eᵢ > 0 → 211 EV₄ opened one notch

212 T₄–T₆ sensing

213 Mean temperature (Tm) of T₄–T₆ sensing

214 Deviation(Xn) calculation
  |Xn| > 1°C, Xn > 0 → 215 EV₁–EV₃ closed one notch
  |Xn| ≦ 1°C
  |Xn| > 1°C, Xn < 0 → 216 EV₁–EV₃ opened one notch

217 (T₄, T₅, T₆ < Tm for non-operating indoor unit. Yes or No)
  Y → (EV₁–EV₃ for non-operating indoor unit, opened one notch)
  N → 218 (EV₁–EV₃ for non-operating indoor unit, opened one notch)

9

# FIG. 11

# F I G. 12

FIG. 13

START

301 Operation status sensing

302 Any change in operation status. Yes or No — N / Y

303 All indoor units non-operating. Yes or No — Y

304 STOP

305 Any indoor unit operating. Yes or No — N / Y

306 EV₁-EV₃ completely closed for non-operating unit

307 EV₁-EV₃ Valve opening for operating indoor unit
1 unit : 160 Pulses
2 units: 120 Pulses
3 units: 100 Pulses

308 EV₄ initial opening setting

309 T₁-T₃, Te sensing

310 Deviation (E₁) calculation
$|E_{n1}| > 1°C$  $E_n < 0$
$|E_{n1}| > 1°C$  $E_n > 0$
$|E_{n1}| \leq 1°C$

311 EV₁-EV₃ Opend one notch

312 EV₁-EV₃ Closed one notch

313 (T₈ Tc sensig, and Difference (ΔT) therebetween calculating)

314 Deviation (E₂) Calculation
$|E_{z1}| > 1°C$  $E_z > 0$
$|E_{z1}| > 1°C$  $E_z < 0$
$|E_{z1}| \leq 1°C$

315 EV4 closed one notch

316 EV4 opened one notch

EP 0 188 630 B1

12

# F I G. 14

# F I G.15  (PRIOR ART)